# EUROPEAN PATENT APPLICATION

(11) **EP 4 799 878 A1**
(43) Date of publication of application: **02.09.2026**
(21) Application number: 26157551.8
(22) Date of filing: 10.02.2026
(51) Int. Cl.: B60R 25/24

(54) **IN-VEHICLE APPARATUS, DISPLAY METHOD, AND DISPLAY PROGRAM**

(30) Priority: 28.02.2025 JP 2025031966
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

An in-vehicle apparatus is mounted on a vehicle configured to be controlled by multiple digital keys. The digital keys are respectively registered to multiple devices. The devices are respectively held by holders. The in-vehicle apparatus includes processing circuitry and a display. Digital key information relates to each digital key and includes information indicating the holder of the device corresponding to each digital key. When displaying the digital key information on the display, the processing circuitry displays only the digital key information about some of the holders among all of the digital key information regarding the vehicle.

## Description

### CROSS-REFERENCE TO RELATED APPLICATIONS

This application is based upon and claims the benefit of priority from Japanese Patent Application No. 2025-031966, filed on February 28, 2025, the entire contents of which are incorporated herein by reference.

### BACKGROUND

### 1. Field

The following description relates to an in-vehicle apparatus, a vehicle, a display method, and a display program.

### 2. Description of Related Art

JP2024-1720A describes a management system of digital keys. The management system includes a vehicle, multiple devices, and a management server. The vehicle stores authentication information, which is used to authenticate a digital key for registration of the digital key. The devices each store key information indicating a digital key for registration of the digital key. The management server is configured to communicate with the devices and the vehicle to manage registration of the digital keys.

There are two types of digital key that may be registered to a device. The first type is an owner key registered to an owner device that belongs to the owner of the vehicle. The second type is a shareable key registered to a device other than the owner device. The shareable key may be registered in response to a request from a device included in the management system including the owner device.

The vehicle includes an in-vehicle apparatus. The in-vehicle apparatus displays digital key information on a display. The digital key information relates to digital key and includes information indicating a holder of a device corresponding to the digital key. The holder of the device may wish the digital key information about the holder not to be displayed on the in-vehicle apparatus.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In an aspect of the present disclosure, an in-vehicle apparatus is configured to be mounted on a vehicle. The vehicle is configured to be controlled by each of digital keys. The digital keys are respectively registered to devices. The devices being respectively held by holders. The in-vehicle apparatus includes processing circuitry and a display. Digital key information relates to each of the digital keys and includes information indicating the holder of the device corresponding to each of the digital keys. When displaying the digital key information on the display, the processing circuitry is configured to display only the digital key information about some of the holders among all of the digital key information regarding the vehicle.

In an aspect of the present disclosure, a display method is for displaying digital key information on a display of an in-vehicle apparatus. The in-vehicle apparatus is configured to be mounted on a vehicle. The vehicle is configured to be controlled by each of digital keys. The digital keys are respectively registered to devices. The devices are respectively held by holders. The digital key information relates to each of the digital keys and includes information indicating the holder of the device corresponding to each of the digital keys. The display method includes displaying only the digital key information about some of the holders among all of the digital key information regarding the vehicle.

In an aspect of the present disclosure, a display program includes an instruction executed by processing circuitry of an in-vehicle apparatus. The in-vehicle apparatus is configured to be mounted on a vehicle configured to be controlled by each of digital keys. The digital keys are respectively registered to devices. The devices are respectively held by holders. The instruction includes causing the processing circuitry, when the in-vehicle apparatus displays digital key information that relates to each of the digital keys and includes information indicating the holder of the device corresponding to each of the digital keys on a display, to display only the digital key information about some of the holders among all of the digital key information regarding the vehicle.

Other features and aspects will be apparent from the following detailed description, the drawings, and the claims.

### BRIEF DESCRIPTION OF THE DRAWINGS

Fig. 1 is a schematic diagram showing a management system including an in-vehicle apparatus in accordance with a first embodiment.
Fig. 2 is a schematic diagram showing owner key information stored in an owner device shown in Fig. 1.
Fig. 3 is a schematic diagram showing shareable key information stored in a shareable device shown in Fig. 1.
Fig. 4 is a schematic diagram showing data in a database shown in Fig. 1.
Fig. 5 is an explanatory diagram showing a process executed by a management system shown in Fig. 1 when an owner key is registered.
Fig. 6 is an explanatory diagram showing a process executed by the management system shown in Fig. 1 when a friend key is registered.
Fig. 7 is an explanatory diagram showing a process executed by the management system shown in Fig. 1 when a guest key is registered.
Fig. 8 is an explanatory diagram showing a process executed by the management system shown in Fig. 1 when a device reaches an area where the device can communicate with the vehicle.
Fig. 9 is a flowchart showing a process executed by the in-vehicle apparatus of Fig. 1 in response to a request for displaying digital key information.
Fig. 10 is a diagram showing a first mode of digital key information displayed by the in-vehicle apparatus of Fig. 1.
Fig. 11 is a diagram showing a second mode of digital key information displayed by the in-vehicle apparatus of Fig. 1.
Fig. 12 is a diagram showing a third mode of digital key information displayed by the in-vehicle apparatus of Fig. 1.
Fig. 13 is a diagram showing a mode of a status notification displayed by the in-vehicle apparatus of Fig. 1.
Fig. 14 is a flowchart showing a process executed when the in-vehicle apparatus of Fig. 1 displays status notification.
Fig. 15 is a flowchart showing a process executed by a second embodiment of an in-vehicle apparatus in response to a request for displaying digital key information.
Fig. 16 is a diagram showing a mode of digital key information displayed by the in-vehicle apparatus of the second embodiment.
Fig. 17 is a flowchart showing a process executed by a third embodiment of an in-vehicle apparatus in response to a request for displaying digital key information.
Fig. 18 is a flowchart showing a process executed by a first modified example of an in-vehicle apparatus.
Fig. 19 is a flowchart showing a process executed by a second modified example of an in-vehicle apparatus.
Fig. 20 is a flowchart showing a process executed by a third modified example of an in-vehicle apparatus.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

A first embodiment of a management system including an in-vehicle apparatus will be described below with reference to the drawings.

### Overview of Management System 10

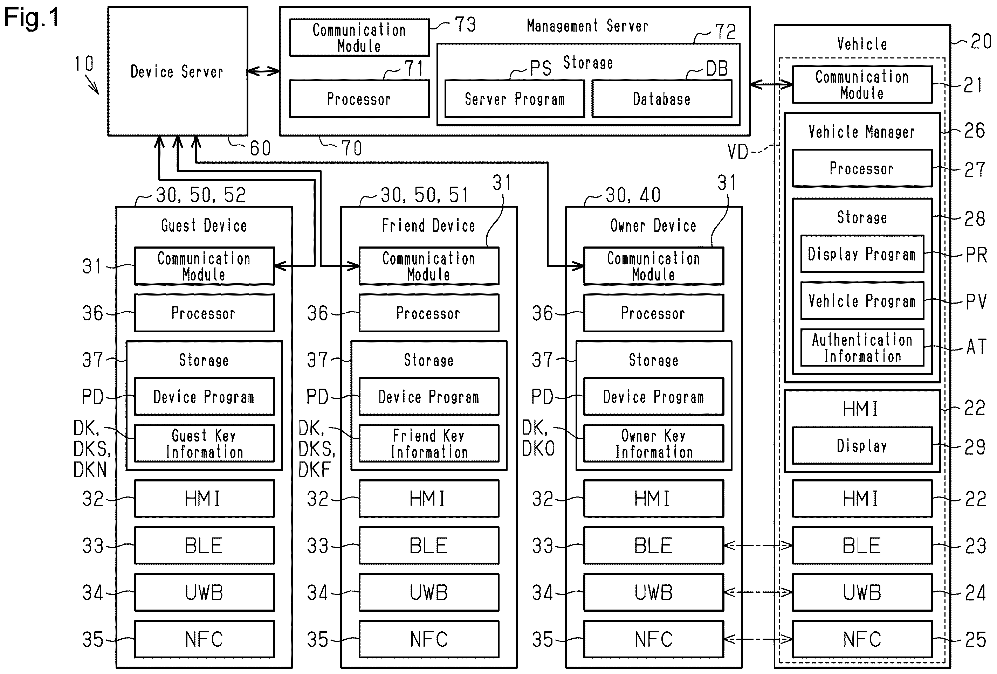

As shown in Fig. 1, a management system 10 manages multiple digital keys that may be used for a vehicle 20. The Car Connectivity Consortium (CCC) has established the standards for digital keys. The digital key functionality in the present embodiment conforms to the standards established by the Car Connectivity Consortium (CCC). The management system 10 includes a vehicle 20, devices 30, a device server 60, and a management server 70.

The vehicle 20 includes an in-vehicle apparatus VD. The in-vehicle apparatus VD includes a communication module 21, an HMI 22, a BLE module 23, a UWB module 24, an NFC module 25, and a vehicle manager 26. HMI is the abbreviation of Human Machine Interface. BLE is the abbreviation of Bluetooth Low Energy. UWB is the abbreviation of Ultra Wide Band. NFC is the abbreviation of Near Field Communication.

The communication module 21 is configured to communicate with the management server 70 through a wireless communication network. The HMI 22 includes an input device, which accepts input operations performed by the user of the vehicle 20, and a presentation device, which presents information to the user. The presentation device of the HMI 22 includes a display 29 configured to present image information to the user. The presentation device includes, for example, a speaker.

The BLE module 23 is configured to perform short-range wireless communication with the device 30 through BLE communication. The UWB module 24 communicates with the device 30 via UWB communication. The UWB module 24 measures the distance between the device 30 and the vehicle 20. The NFC module 25 performs short-range wireless communication with the device 30 via NFC communication.

The vehicle manager 26 is installed in the vehicle 20. The vehicle manager 26 manages the digital keys of the vehicle 20. The vehicle manager 26 is, for example, a digital key ECU. The vehicle manager 26 includes a processor 27 and storage 28.

The storage 28 stores a vehicle program PV, a display program PR, and authentication information AT. The storage 28 corresponds to a non-transitory computer readable storage medium. When the processor 27 runs the vehicle program PV, the vehicle program PV causes the processor 27 to store and/or delete the authentication information AT. The display program PR includes an instruction, when executed by the processor 27, to the processor 27 for displaying an image on the display 29 of the HMI 22. The display performed by the processor 27 in accordance with the display program PR implements a display method described below. The authentication information AT is used to authenticate a digital key so that the digital key is configured to control the vehicle 20 when the digital key is used. The authentication information AT is provided for each digital key.

The processor 27 is processing circuitry. When the processor 27 runs the vehicle program PV, the processor 27 executes processing related to storage and deletion of the authentication information AT.

When authenticating a digital key, the vehicle manager 26 determines whether the digital key is authorized to control the vehicle 20. When the vehicle manager 26 determines that the digital key is authorized to control the vehicle 20, authentication of the digital key is completed.

Subsequent to the completion of authentication of the digital key, the vehicle manager 26 allows the digital key to control the vehicle 20. In an example, when the vehicle manager 26 authenticates the digital key, the vehicle manager 26 enables unlocking of the vehicle 20. In another example, when the vehicle manager 26 authenticates the digital key, the vehicle manager 26 enables starting of the vehicle 20.

In the management system 10, the device 30 includes key information DK described later. The device 30 is a portable information terminal such as a smartphone or a smartwatch.

The device 30 includes a communication module 31, an HMI 32, a BLE module 33, a UWB module 34, an NFC module 35, a processor 36, which is processing circuitry, and storage 37.

The communication module 31 is configured to perform communication with the device server 60 through a wireless communication line. The HMI 32 includes an input device, which accepts input operations performed by the user of the device 30, and a presentation device, which presents information to the user. The presentation device includes, for example, a display and a speaker.

The BLE module 33 is configured to perform short-range wireless communication with the vehicle 20 through BLE communication. The UWB module 34 is configured to perform communication with the vehicle 20 through UWB communication. The NFC module 35 performs short-range wireless communication with the vehicle 20 via NFC communication.

The storage 37 stores a device program PD and key information DK. When the processor 36 runs the device program PD, the device program DP causes the processor 36 to store and/or delete the key information DK. The key information DK includes information that indicates a digital key.

The device program PD includes, for example, a device application and a digital key framework. The device application includes an application for storage and deletion of the key information DK. The digital key framework includes a program that provides the device 30 with a pairing functionality and a digital-key sharing functionality through an application program interface (API) prepared in an operating system (OS). The processor 36 executes processing related to storage and deletion of the key information DK by running the device program PD.

The devices 30 include an owner device 40 and multiple shareable devices 50. The owner device 40 stores owner key information DKO as the key information DK. The owner key information DKO indicates an owner key KO. Only a single owner key KO is allowed to be registered to a single vehicle 20. Accordingly, there is only one owner key KO for each vehicle 20. The owner device 40 belongs to the owner of the vehicle 20.

The owner device 40 may be, instead of being a portable information terminal, a server belonging to the owner of the vehicle 20. As will be described later, the owner device 40 is capable of generating a shareable key KS for another device. When the owner device 40 is a server in the management system 10, the owner device 40 is not used to control the vehicle 20 but is used to generate a shareable key KS for a device in response to a request from that device.

When the owner device 40 is a server, the owner device 40 does not have to include the BLE module 33, the UWB module 34, and the NFC module 35.

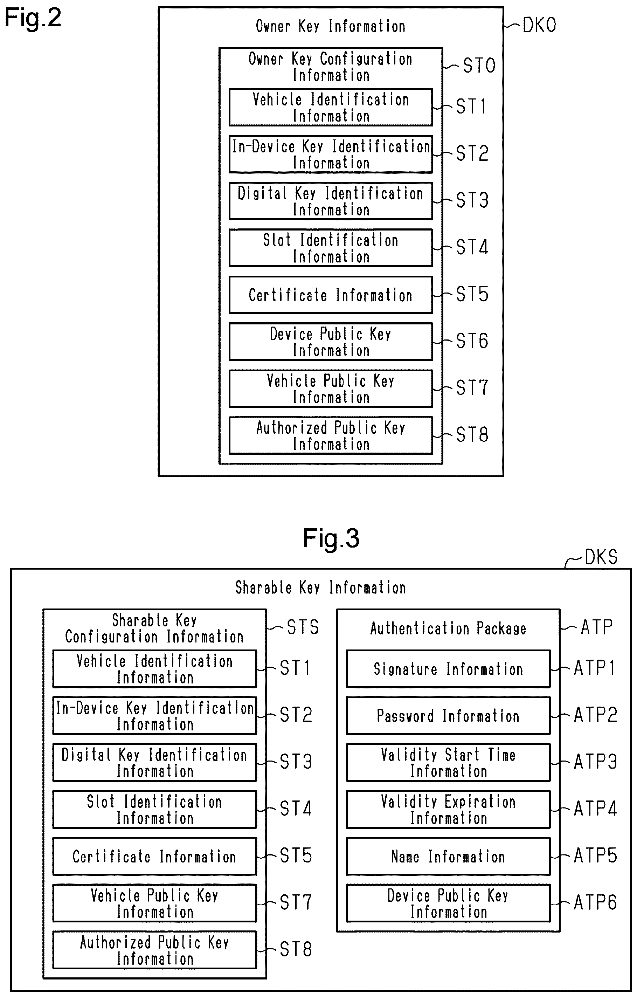

As shown in Fig. 2, the owner key information DKO includes owner key configuration information STO. The owner key configuration information STO includes vehicle identification information ST1, in-device key identification information ST2, digital key identification information ST3, and slot identification information ST4. The owner key configuration information STO further includes certificate information ST5, device public key information ST6, vehicle public key information ST7, and authorized public key information ST8.

The vehicle identification information ST1 includes information that identifies the vehicle 20, for which the digital key is enabled. The vehicle identification information ST1 is, for example, an ID of the vehicle 20.

The in-device key identification information ST2 is used to manage the digital key on the device 30. The in-device key identification information ST2 includes information that allows the digital key to be identified by an application on the device 30.

The digital key identification information ST3 is used to manage the digital key inside the management server 70. The slot identification information ST4 includes information that allows the digital key to be identified locally on the device 30.

The certificate information ST5 indicates a certificate of the digital key. The device public key information ST6 indicates a device public key PKD, which is a public key of the device 30. The device public key PKD in the owner key information DKO indicates a public key of the owner device 40. The vehicle public key information ST7 indicates a vehicle public key PKV, which is a public key of the vehicle 20. The authorized public key information ST8 indicates a vehicle public key PKV that has already been authorized.

As shown in Fig. 1, the shareable device 50 stores shareable key information DKS as the key information DK. The sharable key information KS indicates a shareable key KS. The shareable device 50 is a device 30 different from the owner device 40. Multiple shareable keys KS are allowed to be registered to a single vehicle 20 as available digital keys. Accordingly, there may be multiple shareable keys KS for each vehicle 20.

The shareable devices 50 include a friend device 51 and a guest device 52. The friend device 51 stores friend key information DKF as the shareable key information DKS. The friend key information DKF indicates a friend key KF. The guest device 52 stores guest key information DKN as the shareable key information DKS. The guest key information DKN indicates a guest key KN. Thus, the friend key KF and the guest key KN are different types of shareable keys KS. As will be described later, the friend key KF is a shareable key KS registered in response to a registration request D21 issued directly from the owner device 40. As will be described later, the guest key KN is a shareable key KS registered in response to a registration request D31 from a friend device 51. In other words, the guest key KN is a shareable key KS that has been registered based on a registration request D31 from another device 30, rather than a direct registration request D21 from the owner device 40. The guest key KN refers to a shareable key KS that is not a friend key KF among the shareable keys KS.

When a digital key is registered, the digital key is enabled. More specifically, in the state in which the digital key is registered, the vehicle 20 stores the authentication information AT, and the device 30 stores the key information DK.

As shown in Fig. 3, the shareable key information DKS includes shareable key configuration information STS and an authentication package ATP. The shareable key configuration information STS includes the vehicle identification information ST1, the in-device key identification information ST2, the digital key identification information ST3, and the slot identification information ST4. The shareable key configuration information STS further includes the certificate information ST5, the vehicle public key information ST7, and the authorized public key information ST8. Accordingly, the shareable key configuration information STS is equivalent to the owner key configuration information STO without the device public key information ST6.

The authentication package ATP includes signature information ATP1, password information ATP2, validity start time information ATP3, validity expiration information ATP4, name information ATP5, and device public key information ATP6.

The signature information ATP1 indicates that the shareable device 50 is an authorized entity for sharing a digital key. For example, in the case of the friend device 51, the signature information ATP1 indicates a signature by the owner device 40. The owner signature information indicates that the owner device 40 has signed the device public key PKD of the friend device 51, which is indicated by the device public key information ATP6. Further, for example, in the case of the guest device 52, the signature information ATP1 indicates a signature by the friend device 51. The friend signature information indicates that the friend device 51 has signed the device public key PKD of the guest device 52, which is indicated by the device public key information ATP6.

The password information ATP2 indicates a pairing password PAS used to establish a secure channel between the vehicle 20 and the owner device 40 during a pairing process. The validity start time information ATP3 indicates the earliest date and time at which the shareable key KS becomes valid for use. The validity expiration information ATP4 indicates the latest date and time until which the shareable key KS remains valid for use. The name information ATP5 indicates a name that identifies the shareable key KS. The name information ATP5 is, for example, an identifiable name set by the owner device 40 for each shareable device 50.

As shown in Fig. 1, the device server 60 is configured to relay communication between the device 30 and the management server 70. In Fig. 1, only one device server 60 is shown. However, the device server 60 is provided for each type of the devices 30. That is, the device server 60 used for communication with a first type of device 30 may differ from the device server 60 used for communication with a second type of device 30. For example, the type may refer to the model of the device 30, and a separate device server 60 may be provided for each model of the device 30. In another example in which the type of device 30 includes the communication line the device 30 uses, the device server 60 may be provided for each communication line used by the device 30.

Each of the device servers 60 relays communication between the corresponding device 30 and the management server 70. The devices 30 of different types are each configured to communicate with the management server 70 via the corresponding device server 60.

### Management Server 70

The management server 70 is configured to manage registration of digital keys. The management server 70 is configured to communicate with the vehicle 20 and multiple devices 30. The management server 70 includes a processor 71, which is processing circuitry, storage 72, and a communication module 73. The communication module 73 is configured to perform communication with the device server 60 through a wireless communication line. Further, the communication module 73 is configured to perform wireless communication with the communication module 21 of the vehicle 20.

The storage 72 stores a server program PS and a database DB. When the processor 71 runs the server program PS, the server program PS causes the processor 71 to register a digital key to the database DB and/or delete a digital key from the database DB.

The database DB includes information in which, for each of the digital keys, the corresponding vehicle 20 is associated with a registered device 30. The data DA included in the database DB is partitioned for each vehicle 20. In a state in which a digital key is registered, the management server 70 stores information, as the data DA, indicating a device 30 that stores key information DK indicating the digital key. The management server 70 manages the digital key by updating the data DA in the database DB.

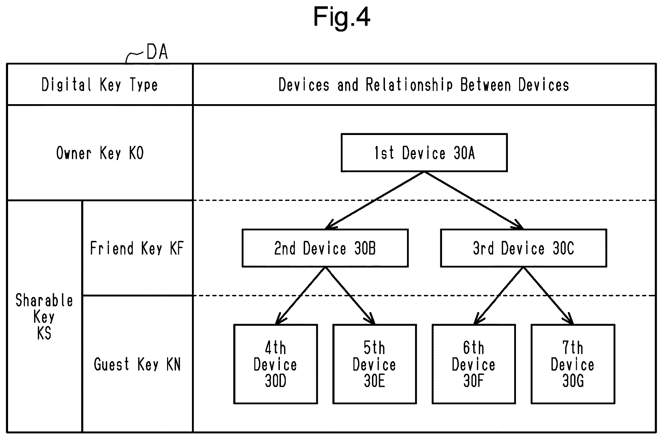

As shown in Fig. 4, data DA on a vehicle 20 includes information related to the types of digital keys registered to the vehicle 20, the registered devices 30, and the relationship between the registered devices 30. The type of digital key determines a priority level of that digital key. From highest to lowest in the hierarchy of priority, the owner key KO, the friend key KF, and the guest key KN are ranked in this order. A higher degree of authority is granted to a digital key having a higher priority level.

The authority granted to a digital key relates to, for example, the number of shareable keys KS that can be requested for registration based on the digital key, the scope of control over the vehicle 20 that can be enabled through authentication of the digital key, or the like. In an example, a digital key having a higher priority level may request registration of a greater number of shareable keys KS. More specifically, for example, the number of friend keys KF that can be requested for registration by the owner device 40 is greater than the number of guest keys KN that can be requested for registration by the friend device 51.

In another example, a broader scope of control over the vehicle 20 may be permitted to a digital key having a higher priority level. The scope of control over the vehicle 20 refers to, for example, the set of controllable functions, such as engine start control of the vehicle 20, power-on control of the vehicle 20, and door unlocking and locking control of the vehicle 20. For example, when the scope of control over the vehicle 20 includes all three of the above functions, the scope of control is broader than when it includes only door unlocking and locking control of the vehicle 20. More specifically, the friend key KF has a scope of control over the vehicle 20 that includes all three functions described above, and the guest key KN has a scope of control over the vehicle 20 that is limited to only unlocking and locking the doors of the vehicle 20.

A state in which digital keys are registered to seven devices 30 for one vehicle 20 will be described. The seven devices 30 are first through seventh devices 30A to 30G. The digital keys respectively registered to the first device 30A to the seventh device 30G are a first key through a seventh key.

The owner key KO is registered as a digital key to the first device 30A. In other words, the first device 30A is the owner device 40. That is, the first digital key is the owner key KO.

The shareable keys KS are respectively registered to the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. That is, the second to seventh digital keys are all shareable keys KS.

More specifically, the friend keys KF are registered as a shareable key KS to the second device 30B and the third device 30C. In other words, the second device 30B and the third device 30C are the friend devices 51. The guest keys KN are registered as a shareable key KS to the fourth device 30D, the fifth device 30E, the sixth device 30F, and the seventh device 30G. In other words, the fourth device 30D, the fifth device 30E, the sixth device 30F, and the seventh device 30G are the guest devices 52.

Hereinafter, the relationship between the registered devices 30 included in the data DA will be described. The second device 30B and the first device 30A have a relationship in which the friend key KF is registered to the second device 30B in response to a registration request from the first device 30A. That is, the second digital key is registered based on the first digital key.

The third device 30C and the first device 30A have a relationship in which the friend key KF is registered to the third device 30C in response to a registration request from the first device 30A. That is, the third digital key is registered based on the first digital key.

The fourth device 30D and the second device 30B have a relationship in which the guest key KN is registered to the fourth device 30D in response to a registration request from the second device 30B. That is, the fourth digital key is registered based on the second digital key.

The fifth device 30E and the second device 30B have a relationship in which the guest key KN is registered to the fifth device 30E in response to a registration request from the second device 30B. That is, the fifth digital key is registered based on the second digital key.

The sixth device 30F and the third device 30C have a relationship in which the guest key KN is registered to the sixth device 30F in response to a registration request from the third device 30C. That is, the sixth digital key is registered based on the third digital key.

The seventh device 30G and the third device 30C have a relationship in which the guest key KN is registered to the seventh device 30G in response to a registration request from the third device 30C. That is, the seventh digital key is registered based on the third digital key.

As described above, the data DA includes information related to the devices 30 to which the digital keys are registered. In the data DA, each registered device 30 is associated with information indicating the device 30 that initiated the registration request of the device 30. The data DA also indicates which digital key each digital key is registered based on.

### Registration of Digital Key

Next, a process for registering digital keys in the management system 10 will be described. The management system 10 may register the owner key KO, the friend key KF, or the guest key KN. The following description explains the overall process from a state in which no digital key is registered to a state in which digital keys are registered. In the following description, processes executed by the processor 27 are described as processes executed by the vehicle 20. The processing executed by the processor 36 will be described as the processing executed by the device 30. The processing executed by the processor 71 will be described as the processing executed by the management server 70.

### Registration of Owner Key KO

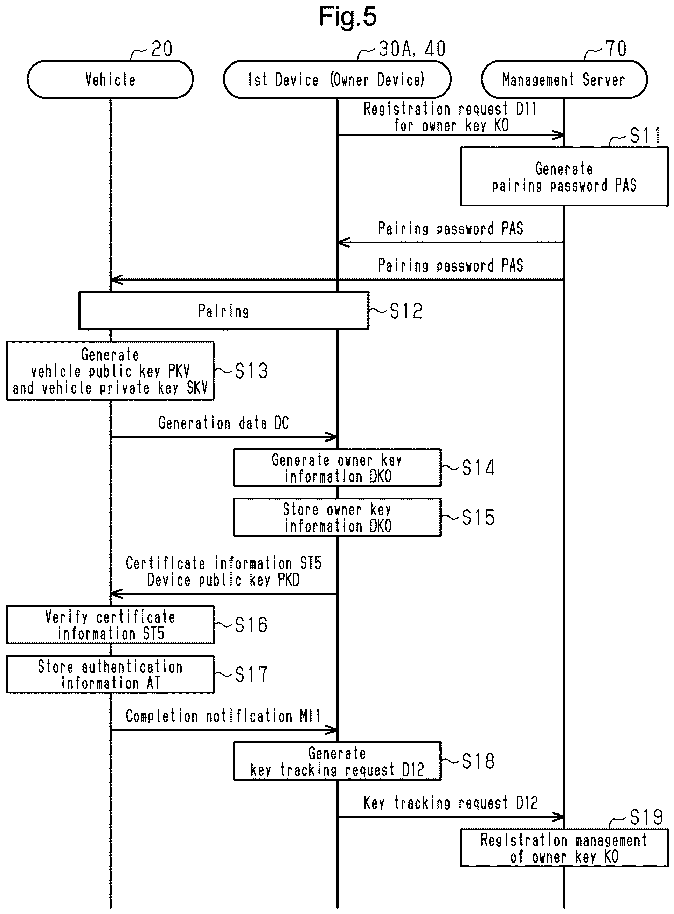

As shown in Fig. 5, the management system 10 executes a process to register the owner key KO. In the example described hereinafter, the owner key KO is registered to the first device 30A, which does not store the key information DK indicating the owner key KO.

The management system 10 stores the key information DK indicating the owner key KO in the first device 30A through the registration of the owner key KO. The management system 10 causes the vehicle 20 to store the authentication information AT for authenticating the owner key KO through the registration of the owner key KO. As a result, the first device 30A becomes the owner device 40. Prior to the registration of the owner key KO, an application required for the registration is installed on the first device 30A.

When the management server 70 obtains a registration request D11 for the owner key KO from, for example, the first device 30A, the management server 70 starts the process beginning from step S11. In step S11, the management server 70 generates the pairing password PAS. Then, the management server 70 transmits information indicating the pairing password PAS to the vehicle 20 and the first device 30A.

The vehicle 20 receives the pairing password PAS. After receiving the pairing password PAS, the vehicle 20 is set to a pairing mode via the HMI 22. The vehicle 20 then stands by in a state in which the vehicle 20 can receive the password from the first device 30A. Then, the vehicle 20 proceeds to step S12.

In step S12, the vehicle 20 performs a pairing process with the first device 30A. During the pairing process, the vehicle 20 establishes a secure channel for data transmission between the vehicle 20 and the first device 30A. The pairing process is performed using the pairing password PAS sent from the management server 70 to the vehicle 20 and the first device 30A. When the pairing process is completed, the vehicle 20 proceeds to step S13.

In step S13, the vehicle 20 generates the vehicle public key PKV, which is a public key of the vehicle 20, and a vehicle private key SKV, which is a private key of the vehicle 20. Then, the vehicle 20 transmits, to the first device 30A through the secure channel, generation data DC for generating the owner key KO. The generation data DC includes the vehicle identification information ST1, and the vehicle public key information ST7 that indicates the vehicle public key PKV. The first device 30A receives the generation data DC. Then, the first device 30A proceeds to step S14.

In step S14, the first device 30A generates the owner key information DKO indicating the owner key KO. Then, the first device 30A proceeds to step S15.

In step S15, the first device 30A stores the owner key information DKO. As a result, the first device 30A becomes the owner device 40. Subsequently, the first device 30A transmits the certificate information ST5 related to the owner key KO, and the device public key information ST6 indicating the device public key PKD, to the vehicle 20.

When receiving the certificate information ST5 and the device public key information ST6, the vehicle 20 executes the process of step S16. In step S16, the vehicle 20 verifies the certificate information ST5. When the verification of the certificate information ST5 is completed, the vehicle 20 proceeds to step S17.

In step S17, the vehicle 20 stores the device public key information ST6 indicating the device public key PKD, as the authentication information AT. Then, the vehicle 20 transmits, to the first device 30A, a completion notification M11 indicating that the authentication information AT has been stored.

Thereafter, when receiving the completion notification M11, the first device 30A executes the process of step S18. In step S18, the first device 30A generates a key tracking request D12 for the owner key KO. The key tracking request D12 is a signal that requests the management server 70 to update the database DB. Then, the first device 30A transmits the key tracking request D12 for the owner key KO via the device server 60 to the management server 70.

When receiving the key tracking request D12, the management server 70 executes the process of step S19. In step S19, the management server 70 performs registration management of the owner key KO. Specifically, the management server 70 stores the data DA of the vehicle 20, indicating that the device 30 to which the owner key KO is registered is the first device 30A, in the database DB. The management system 10 then terminates the process for registering the owner key KO.

### Registration of Friend Key KF

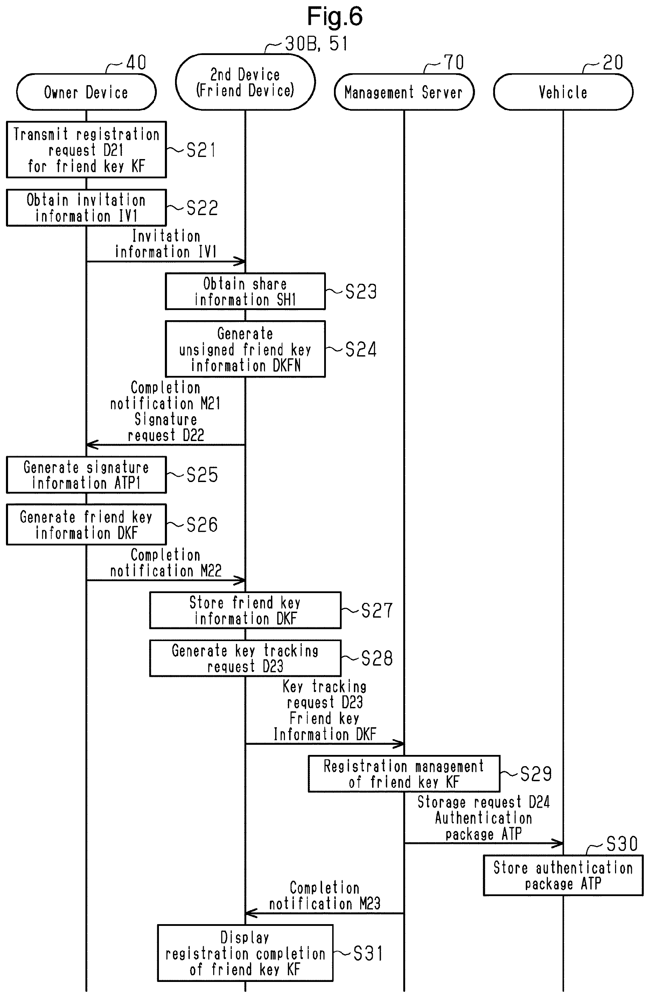

As shown in Fig. 6, the management system 10 executes a process to register the friend key KF. The following describes an example of registering the friend key KF to the second device 30B, which does not store the friend key information DKF, through the process.

When an operation for requesting the registration of the friend key KF is performed on the owner device 40, the owner device 40 first executes the process of step S21. In step S21, the owner device 40 transmits the registration request D21 for the friend key KF to a relay server (not shown). Then, the owner device 40 proceeds to step S22.

In step S22, the owner device 40 obtains invitation information IV1 for sharing a digital key from the relay server. The invitation information IV1 includes, for example, a uniform resource locator (URL) link. Share information SH1 necessary for sharing the digital key can be obtained through the URL link. Then, the owner device 40 transmits the invitation information IV1 to the second device 30B.

When receiving the invitation information IV1, the second device 30B executes the process of step S23. In step S23, the second device 30B obtains the share information SH1 based on the invitation information IV1. Specifically, the second device 30B downloads the share information SH1 through the URL link.

The share information SH1 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 are set by the owner device 40. Then, the second device 30B proceeds to step S24.

In step S24, the second device 30B generates unsigned friend key information DKFN using the share information SH1. The unsigned friend key information DKFN is friend key information DKF that does not have the signature information ATP1. The unsigned friend key information DKFN includes the obtained share information SH1. Then, the second device 30B transmits, to the owner device 40, a completion notification M21 indicating that the generated unsigned friend key information DKFN has been uploaded through the URL link, and a signature request D22 that requests a signature.

The owner device 40 receives the completion notification M21 and the signature request D22 from the second device 30B. When the owner device 40 receives the completion notification M21, the owner device 40 obtains the unsigned friend key information DKFN. When the owner device 40 receives the signature request D22, the owner device 40 performs step S25 in response to an operation performed on the owner device 40.

In step S25, the owner device 40 generates the signature information ATP1. More specifically, the owner device 40 causes the HMI 32 to present the obtained unsigned friend key information DKFN, and accepts an operation indicating that the user of the owner device 40 has agreed to the registration of the friend key KF. In response to such an operation, the owner device 40 generates the signature information ATP1. Then, the owner device 40 proceeds to step S26.

In step S26, the owner device 40 adds the signature information ATP1 to the unsigned friend key information DKFN. That is, the owner device 40 generates the friend key information DKF. Thereafter, the owner device 40 uploads the generated friend key information DKF to the URL link, which is the invitation information IV1. Then, the owner device 40 transmits, to the second device 30B, a completion notification M22 indicating that the generated friend key information DKF has been uploaded through the URL link.

The second device 30B receives the completion notification M22. Then, the second device 30B performs step S27. In step S27, the second device 30B downloads and stores the friend key information DKF. As a result, the second device 30B is set as the friend device 51. Subsequently, the second device 30B proceeds to step S28.

In step S28, the second device 30B generates a key tracking request D23 for the friend key KF. Then, the second device 30B transmits, to the management server 70, the friend key information DKF and the key tracking request D23 for the friend key KF.

When receiving the key tracking request D23 for the friend key KF, the management server 70 executes the process of step S29. In step S29, the management server 70 performs registration management of the friend key KF.

Specifically, the management server 70 verifies that the friend key KF, which is the target of the key tracking request D23, is not listed in a rejection list. The rejection list is a list of the shareable keys KS, including the friend keys KF and the guest keys KN, for which deletion requests have been received. When the subject friend key KF is included in the rejection list, the management server 70 transmits, to the second device 30B, a notification indicating that the key tracking request D23 cannot be accepted.

When the friend key KF for which the key tracking request D23 has been received is not listed in the rejection list, the management server 70 registers the friend key KF for which the key tracking request D23 has been received to the database DB. Specifically, the management server 70 stores the data DA of the vehicle 20, indicating that the device 30 registered as the friend device 51 is the second device 30B, in the database DB. The management server 70 stores the relationship between the second device 30B and the owner device 40 with reference to the obtained friend key information DKF.

Then, the management server 70 transmits, to the vehicle 20, the authentication package ATP included in the friend key information DKF, and a storage request D24 that requests storage of the authentication package ATP. That is, the management server 70 transmits, to the vehicle 20, the device public key information ST6 indicating the device public key PKD of the friend device 51. Also, the management server 70 notifies the vehicle 20 that the device public key PKD has been signed by the owner device 40.

When the vehicle 20 receives the storage request D24 and the authentication package ATP from the management server 70, the vehicle 20 performs step S30. In step S30, the vehicle 20 stores the received authentication package ATP as the authentication information AT that authenticates the friend key KF.

Subsequent to the completion of the registration management, the management server 70 transmits a completion notification M23 of the key tracking to the second device 30B.

When receiving the completion notification M23 of the key tracking, the second device 30B executes the process of step S31. In the process of step S31, the second device 30B presents information indicating the completion of the registration of the friend key KF on the HMI 32. For example, the second device 30B causes the HMI 32 to display an image indicating that the friend key KF has been registered. This ends the process executed by the management system 10 to register the friend key KF.

### Registration of Guest Key KN

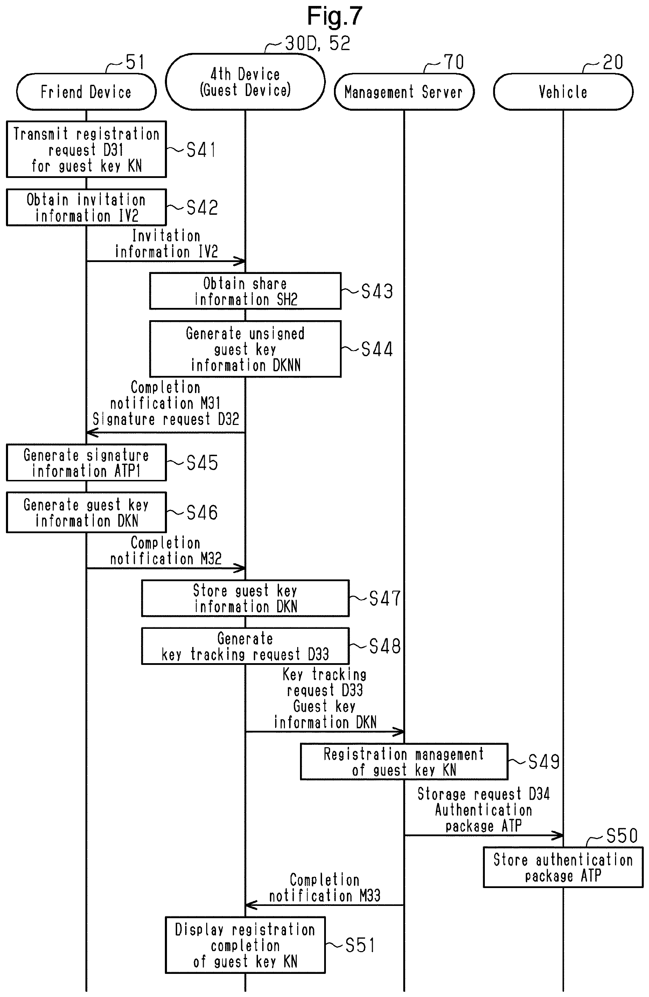

As shown in Fig. 7, the management system 10 executes a process in order to register the guest key KN. The following describes an example of registering the guest key KF to the third device 30C, which does not store the guest key information DKN, through the process.

When an operation for requesting the registration of the guest key KN is performed on the friend device 51, the friend device 51 first executes the process of step S41. In step S41, the friend device 51 transmits the registration request D31 for the guest key KN to a relay server (not shown). Then, the friend device 51 proceeds to step S42.

In step S42, the friend device 51 obtains invitation information IV2 for sharing a digital key from the relay server. The invitation information IV2 includes, for example, a URL link. Share information SH2 necessary for sharing the digital key can be obtained through the URL link. Then, the friend device 51 transmits the invitation information IV2 to the fourth device 30D.

When receiving the invitation information IV2, the fourth device 30D executes the process of step S43. In step S43, the fourth device 30D obtains the share information SH2 from the invitation information IV2. Specifically, the fourth device 30D downloads the share information SH2 through the URL link.

The share information SH2 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 are set by the friend device 51. Then, the fourth device 30D proceeds to step S44.

In step S44, the fourth device 30D generates unsigned guest key information DKNN using the share information SH2. The unsigned guest key information DKNN is the guest key information DKN without the signature information ATP1. The unsigned guest key information DKNN includes the obtained share information SH2. Subsequently, the fourth device 30D transmits a completion notification M31 to the friend device 51, indicating that the upload of the generated unsigned guest key information DKNN to the URL link has been completed. The fourth device 30D also transmits a signature request D32 to the friend device 51.

The friend device 51 receives the completion notification M31 and the signature request D32 from the fourth device 30D. When the friend device 51 receives the completion notification M31, the friend device 51 obtains the unsigned guest key information DKNN. When the friend device 51 receives the signature request D32, the friend device 51 is operated to execute the process of step S45.

In step S45, the friend device 51 generates the signature information ATP1. Specifically, the friend device 51 causes the HMI 32 to present the unsigned guest key information DKNN that has been obtained, and accepts an operation indicating that the user of the friend device 51 has agreed to the registration of the guest key KN. In response to such an operation, the friend device 51 generates the signature information ATP1. Then, the friend device 51 proceeds to step S46.

In step S46, the friend device 51 adds the signature information ATP1 to the unsigned guest key information DKNN. That is, the friend device 51 generates the guest key information DKN. Then, the friend device 51 uploads the generated guest key information DKN through the URL link included in the invitation information IV2. The friend device 51 transmits, to the fourth device 30D, a completion notification M32 indicating that the generated guest key information DKN has been uploaded through the URL link.

The fourth device 30D receives the completion notification M32. Then, the fourth device 30D performs step S47. In step S47, the fourth device 30D downloads and stores the guest key information DKN. As a result, the fourth device 30D is set as the guest device 52. Then, the fourth device 30D proceeds to step S48.

In step S48, the fourth device 30D generates a key tracking request D33 for the guest key KN. Then, the fourth device 30D transmits, to the management server 70, the guest key information DKN and the key tracking request D33 for the guest key KN.

When the management server 70 receives the key tracking request D33 for the guest key KN, the management server 70 executes the process of step S49. In step S49, the management server 70 performs registration management of the guest key KN.

Specifically, the management server 70 verifies that the guest key KN, which is the target of the key tracking request D33, is not listed in the rejection list. When the guest key KN is included in the rejection list, the management server 70 transmits, to the fourth device 30D, a notification indicting that the key tracking request D33 cannot be accepted.

When the guest key KN is not listed in the rejection list, the management server 70 registers the guest key KN, which is the target of the key tracking request D33, to the database DB. Specifically, the management server 70 stores the data DA of the vehicle 20, indicating that the device 30 registered as the guest device 52 is the fourth device 30D, in the database DB. The management server 70 stores the relationship between the fourth device 30D and the friend device 51 with reference to the obtained guest key information DKN. Specifically, the management server 70 stores data indicating that the fourth device 30D is the device 30 having the guest key KN registered in response to the registration request D31 from the friend device 51.

Then, the management server 70 transmits, to the vehicle 20, the authentication package ATP included in the guest key information DKN, and a storage request D34 that requests storage of the authentication package ATP. That is, the management server 70 transmits, to the vehicle 20, the device public key information ST6 indicating the device public key PKD of the guest device 52. Also, the management server 70 notifies the vehicle 20 that the device public key PKD has been signed by the friend device 51.

When the vehicle 20 receives the authentication package ATP and the storage request D34, the vehicle 20 executes the process of step S50. In step S50, the vehicle 20 stores the received authentication package ATP. The authentication package ATP includes the authentication information AT that authenticates the guest key KN.

Subsequent to the completion of the registration management, the management server 70 transmits a completion notification M33 of the key tracking to the fourth device 30D.

When receiving the completion notification M33 of the key tracking, the fourth device 30D executes the process of step S51. In step S51, the fourth device 30D causes the HMI 32 to present information indicating that the guest key KN has been registered. For example, the fourth device 30D causes the HMI 32 to display an image indicating that the guest key KN has been registered. This ends the process executed by the management system 10 to register the guest key KN.

### Digital Key Authentication

When a digital key is registered through processes such as those shown in Figs. 5 to 7, the digital key may control the vehicle 20. As described above, subsequent to the completion of authentication of the digital key, the vehicle 20 allows the digital key to control the vehicle 20.

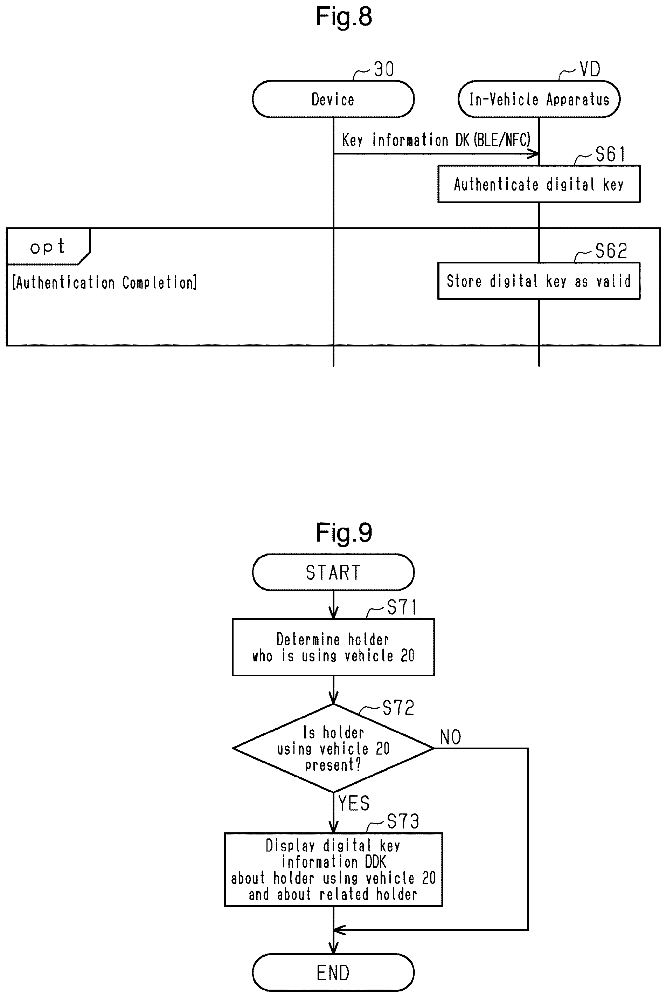

In the vehicle 20, the in-vehicle apparatus VD executes authentication of the digital key when the device 30 reaches an area where the BLE communication or the NFC communication is performable between the device 30 and the vehicle 20. Fig. 8 shows a process executed by the management system 10 when the device 30 reaches the area where the BLE communication or the NFC communication is performable between the device 30 and the vehicle 20.

A process shown in Fig. 8 will be described below. Hereinafter, processes executed by the processor 27 are described as processes executed by the in-vehicle apparatus VD. Processes executed by the processor 36 are described as processes executed by the device 30.

As shown in Fig. 8, the device 30 reaches the area where the BLE communication or the NFC communication is performable between the device 30 and the vehicle 20. Then, the device 30 transmits information indicating the stored key information DK from the storage 37. When the BLE communication is performable with the vehicle 20, the device 30 transmits information showing the key information DK on the in-vehicle apparatus VD through the BLE communication. When the NFC communication is performable with the vehicle 20, the device 30 transmits information showing the key information DK on the in-vehicle apparatus VD through the NFC communication.

As shown in Fig. 8, when receiving the information showing the key information DK, the in-vehicle apparatus VD executes the process of step S61. In the process of step S61, the in-vehicle apparatus VD executes authentication of the digital key indicated by the received key information DK.

In the digital key authentication, the in-vehicle apparatus VD compares the received key information DK with the authentication information AT stored in the storage 28 to determine whether the digital key indicated by the key information DK is authorized to control the vehicle 20. For example, when the digital key indicated by the certificate information ST5 included in the key information DK is found in the digital keys indicated by the authentication information AT stored in the storage 28, the in-vehicle apparatus VD determines that the digital key of the key information DK is authorized to control the vehicle 20.

When the in-vehicle apparatus VD determines that the digital key indicated by the received key information DK is authorized to control the vehicle 20, the digital key authentication is completed.

As shown in Fig. 8, subsequent to completion of the digital key authentication, the in-vehicle apparatus VD executes the process of step S62. In the process of step S62, the in-vehicle apparatus VD stores the authorized digital key as valid in the storage 28. The valid digital key refers to a digital key configured to control the vehicle 20 since the authentication of the digital key has been completed by the in-vehicle apparatus VD. Thus, the digital key indicated by the key information DK stored in the device 30 is configured to control the vehicle 20. Hereinafter, the digital key that is not valid is referred to as the digital key as invalid.

The management system 10 ends the process shown in Fig. 8. The in-vehicle apparatus VD continuously stores the authorized digital key as valid until the device 30 is so far from the vehicle 20 that the device 30 cannot perform any of the UWB communication, the BLE communication, and the NFC communication with the vehicle 20.

### General Display by the In-Vehicle Apparatus VD

The in-vehicle apparatus VD displays digital key information DDK on the display 29 in response to operation of a user. The digital key information DDK is related to a digital key registered through processes such as those shown in Figs. 5 to 7. The digital key information DDK displayed by the in-vehicle apparatus VD is based on the authentication information AT stored in the storage 28.

The digital key information DDK includes information indicating the holder of the device 30 corresponding to the digital key. The device 30 corresponding to a digital key refers to a device 30 having the storage 37 storing the key information DK of the digital key.

The digital key information DDK may include various types of information other than the information indicating the holder of the device 30 corresponding to the digital key. The in-vehicle apparatus VD displays information on whether the digital key is valid as the digital key information DDK in addition to the information indicating the holder of the device 30 corresponding to the digital key.

### Process Executed for Displaying Digital Key Information DDK

Fig. 9 displays a process executed by the in-vehicle apparatus VD for displaying the digital key information DDK. When an operation for requesting display of the digital key information DDK is performed on the in-vehicle apparatus VD, the processor 27 executes the display program PR to perform the process shown in Fig. 9.

As shown in Fig. 9, when the operation for requesting display of the digital key information DDK is performed, the processor 27 executes the process of step S71. In the process of step S71, the processor 27 determines whether the holder of the device 30 is using the vehicle 20. In this process, the processor 27 checks information stored in the storage 28 and determines that the holder of the device 30 corresponding to the valid digital key is using the vehicle 20. Subsequently, the processor 27 proceeds to step S72.

In the process of step S72, the processor 27 determines whether the holder of the device 30 who is using the vehicle 20 is present. In step S71, when a holder of the device 30 is determined to be using the vehicle 20, the processor 27 determines that the holder of the device 30 who is using the vehicle 20 is present. In step S71, when no holder of the device 30 is determined to be using the vehicle 20, the processor 27 determines that the holder of the device 30 who is using the vehicle 20 is not present.

As shown in Fig. 9, when determining that the holder of the device 30 who is using the vehicle 20 is not present (step S72: NO), the processor 27 ends the process shown in Fig. 9. In other words, when the holder of the device 30 who is using the vehicle 20 is not present, the processor 27 ends the process shown in Fig. 9 without displaying the digital key information DDK.

As shown in Fig. 9, when determining that the holder of the device 30 who is using the vehicle 20 is present (step S72: YES), the processor 27 proceeds to step S73. In the process of step S73, the processor 27 displays the digital key information DDK about the holder of the device 30 who is determined to be using the vehicle 20 in step S71 and the digital key information DDK about a related holder. The related holder will be described later. Subsequently, the processor 27 ends the process shown in Fig. 9.

### Specific Modes of Display by the In-Vehicle Apparatus VD

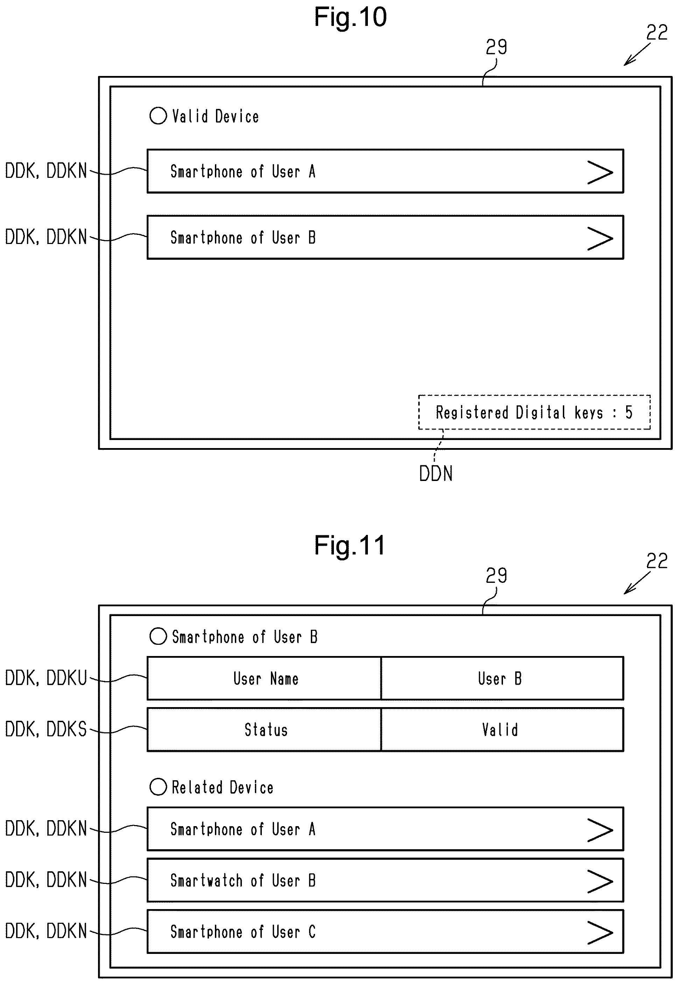

Figs. 10 to 12 each show a specific mode of the digital key information DDK displayed by the in-vehicle device VD in a hypothetical case. The specific modes of display by the in-vehicle apparatus VD will be described below with reference to Figs. 10 to 12. The processes for displaying the modes shown in Figs. 10 to 12 executed by the in-vehicle apparatus VD are implemented by the processor 27 executing the display program PR.

In the hypothetical case, four users, namely, users A to D, each owns a device 30.

The user A is the owner of the vehicle 20. In the hypothetical case, the owner device 40 is a smartphone of the user A.

The user B owns a smartphone. The smartphone of the user B is a friend device 51 to which the friend key KF is registered based on a request from the smartphone of the user A.

The user B owns a smartwatch in addition to the smartphone. The smartwatch of the user B is a guest device 52 to which the guest key KN is registered based on a request from the smartphone of the user B.

The user C owns a smartphone. The smartphone of the user C is a guest device 52 to which the guest key KN is registered based on a request from the smartphone of the user B.

The user D owns a smartphone. The smartphone of the user D is a friend device 51 to which the friend key KF is registered based on a request from the smartphone of the user A.

In the hypothetical case, when the smartphone of the user A and the smartphone of the user B are valid, the in-vehicle apparatus VD is requested to display the digital key information DDK.

### First Mode

In the hypothetical case, when the in-vehicle apparatus VD is requested to display the digital key information DDK, the in-vehicle apparatus VD executes the process shown in Fig. 9. Fig. 10 shows a display mode initially shown on the display 29 as a result of the process. Hereinafter, the display mode shown in Fig. 10 is referred to as the first mode.

In the first mode, the in-vehicle apparatus VD displays device name information DDKN of a device 30 as the digital key information DDK. The device name information DDKN indicates the device name of the device 30. The device name is a name of the device 30 provided by the user to identify the device 30.

As shown in Fig. 10, in the first mode, the in-vehicle apparatus VD displays the device name information DDKN surrounded by a rectangle for each device 30. In the first mode, the in-vehicle apparatus VD displays a list of the device names of the devices 30.

In Fig. 10, two pieces of the device name information DDKN are shown. The upper piece of the device name information DDKN indicates the device name of the smartphone owned by the user A. More specifically, in Fig. 10, the upper piece of the device name information DDKN is the digital key information DDK about the digital key registered to the smartphone of the user A.

In the hypothetical case, the digital key registered to the smartphone of the user A corresponds to the first digital key described with reference to Fig. 4. In the description of the hypothetical case, the digital key registered to the smartphone of the user A is referred to as the first digital key.

In Fig. 10, of the two pieces of the device name information DDKN, the lower piece of the device name information DDKN indicates the device name of the smartphone owned by the user B. More specifically, in Fig. 10, the lower piece of the device name information DDKN is the digital key information DDK about the digital key registered to the smartphone of the user B.

In the hypothetical case, the digital key registered to the smartphone of the user B corresponds to the second digital key described with reference to Fig. 4. In the description of the hypothetical case, the digital key registered to the smartphone of the user B is referred to as the second digital key.

The device name is formed of a combination of the holder of the device 30 and the type of the device 30.

In Fig. 10, the device name indicated by the upper piece of the device name information DDKN includes the characters "User A" indicating the holder of the device 30. In Fig. 10, the device name indicated by the upper piece of the device name information DDKN includes the characters "Smartphone" indicating the type of the device 30.

In Fig. 10, the device name indicated by the lower piece of the device name information DDKN includes the characters "User B" indicating the holder of the device 30. In Fig. 10, the device name indicated by the lower piece of the device name information DDKN includes the characters "Smartphone" indicating the type of the device 30.

In the first mode, the in-vehicle apparatus VD displays the digital key information DDK of only the first digital key and the second digital key, which are valid. In other words, in the first mode, the in-vehicle apparatus VD displays only the digital key information DDK about the holders who are determined to be using the vehicle 20 in the process of step S71 in Fig. 9.

As shown in Fig. 10, in the first mode, the in-vehicle apparatus VD displays quantity information DDN on the display 29. The quantity information DDN indicates the number of digital keys that are configured to control the vehicle 20. In the hypothetical case, as described above, the digital keys are registered to the five devices by the users A to D. Hence, the in-vehicle apparatus VD displays that the number of digital keys registered for the vehicle 20 is five as the quantity information DDN.

### Second Mode

In the first mode, the rectangle surrounding the device name information DDKN entirely serves as a button. In Fig. 10, when the user presses the rectangle surrounding the upper piece of device name information DDKN, the in-vehicle apparatus VD displays the detail of the digital key information DDK of the first digital key. In Fig. 10, when the user presses the rectangle surrounding the lower piece of device name information DDKN, the in-vehicle apparatus VD displays details of the digital key information DDK of the second digital key.

Fig. 11 shows a display mode shown on the display 29 when the user presses the rectangle surrounding the lower one of the device names. In other words, Fig. 11 is a screen displaying details of the digital key information DDK of the second digital key. Hereinafter, the display mode shown in Fig. 11 is referred to as the second mode.

As shown in Fig. 11, in the second mode, the in-vehicle apparatus VD displays user information DDKU of the second digital key. The user information DDKU is a piece of the digital key information DDK indicating the holder of the device 30 corresponding to the digital key. In Fig. 11, the name of the user B is shown as the user information DDKU of the second digital key.

As shown in Fig. 11, in the second mode, the in-vehicle apparatus VD displays the status information DDKS of the second digital key. The status information DDKS is a piece of the digital key information DDK indicating whether the digital key is currently valid. Fig. 11 shows that the second digital key is valid as the status information DDKS of the second digital key.

As shown in Fig. 11, in the second mode, the in-vehicle apparatus VD displays the digital key information DDK of a digital key related to the second digital key in addition to the digital key information DDK of the second digital key.

The related digital key is a digital key that is registered to the device 30 that requested to register a digital key whose digital key information DDK is displayed, or a digital key that is requested to be registered by a digital key, the digital key information DDK of which is displayed. Hereinafter, a device 30 corresponding to the related digital key is referred to as a related device 30. Also, the holder of the related device 30 is referred to as a related holder.

Fig. 11 shows the digital key information DDK of the digital key that is registered to the smartphone of the user A, which is the device 30 that requested to register the second digital key. That is, Fig. 11 shows the digital key information DDK of the first digital key.

Also, Fig. 11 shows the digital key information DDK of the digital key registered to the smartwatch of the user B. That is, Fig. 11 shows the digital key information DDK of the digital key requested to be registered by the second digital key.

In the hypothetical case, the digital key registered to the smartwatch of the user B corresponds to the fourth digital key described with reference to Fig. 4. In the description of the hypothetical case, the digital key registered to the smartwatch of the user B is referred to as the fourth digital key.

Also, Fig. 11 shows the digital key information DDK of the digital key registered to the smartphone of the user C. That is, Fig. 11 shows the digital key information DDK of the digital key requested to be registered by the second digital key.

In the hypothetical case, the digital key registered to the smartphone of the user C corresponds to the fifth digital key described with reference to Fig. 4. In the description of the hypothetical case, the digital key registered to the smartphone of the user C is referred to as the fifth digital key.

As described above, in the hypothetical case, the digital key related to the second digital key includes the first digital key, the fourth digital key, and the fifth digital key. As shown in Fig. 11, in the second mode, the in-vehicle apparatus VD displays the device name information DDKN of the first digital key as the digital key information DDK of the digital key related to the second digital key. As shown in Fig. 11, in the second mode, the in-vehicle apparatus VD also displays the device name information DDKN of the fourth digital key as the digital key information DDK of the digital key related to the second digital key. As shown in Fig. 11, in the second mode, the in-vehicle apparatus VD also displays the device name information DDKN of the fifth digital key as the digital key information DDK of the digital key related to the second digital key.

As shown in Fig. 11, in the second mode, the in-vehicle apparatus VD displays the device name information DDKN of the digital key related to the second digital key surrounded by a rectangle for each device 30.

As described above, in the second mode, the in-vehicle apparatus VD displays the digital key information DDK of the second digital key that is currently valid. In addition, in the second mode, the in-vehicle apparatus VD displays the digital key information DDK of each of the first digital key, the fourth digital key, and the fifth digital key, which are related to the second digital key.

In other words, in the second mode, the in-vehicle apparatus VD displays the digital key information DDK about the user B who is determined to be using the vehicle 20. In addition, in the second mode, the in-vehicle apparatus VD displays the digital key information DDK about the user A and the user C, who are the holders related to the second digital key.

### Third Mode

In the second mode, the rectangular surrounding the device name information DDKN of each related digital key entirely serves as a button. In Fig. 11, when the user presses the rectangle surrounding the device name information DDKN of the first digital key, the in-vehicle apparatus VD displays details of the digital key information DDK of the first digital key. In Fig. 11, when the user presses the rectangle surrounding the device name information DDKN of the fourth digital key, the in-vehicle apparatus VD displays details of the digital key information DDK of the fourth digital key. In Fig. 11, when the user presses the rectangle surrounding the device name information DDKN of the fifth digital key, the in-vehicle apparatus VD displays details of the digital key information DDK of the fifth digital key.

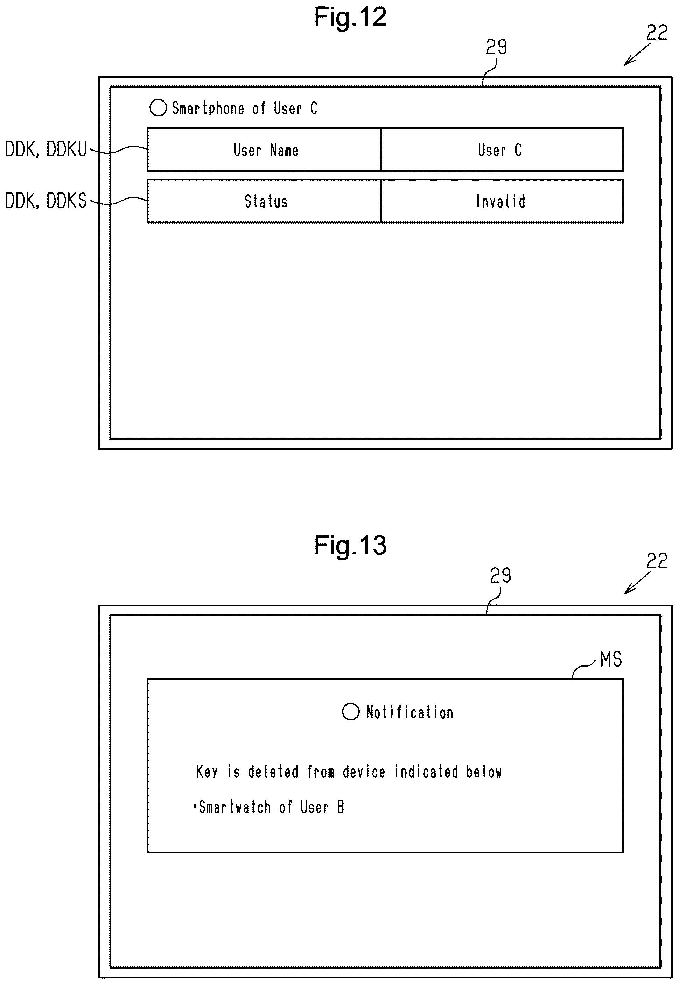

Fig. 12 shows a display mode shown on the display 29 when the user presses the rectangle surrounding the device name information DDKN of the fifth digital key. That is, Fig. 12 shows a screen displaying details of the digital key information DDK of the fifth digital key. Hereinafter, the display mode shown in Fig. 12 is referred to as the third mode.

As shown in Fig. 12, in the third mode, the in-vehicle apparatus VD displays the user information DDKU of the fifth digital key. In Fig. 12, the name of the user C is shown as the user information DDKU of the fifth digital key.

As shown in Fig. 12, in third second mode, the in-vehicle apparatus VD displays the status information DDKS of the fifth digital key. In the hypothetical case, the fifth digital key is not valid. In other words, in the hypothetical case, the fifth digital key is invalid. Fig. 12 shows that the fifth digital key is invalid as the status information DDKS of the fifth digital key.

The third mode differs from the second mode in that the digital key information DDK of a digital key related to the fifth digital key is not displayed.

Thus, in the third mode, the in-vehicle apparatus VD displays the digital key information DDK of the digital key related to the digital key whose digital key information DDK is displayed in detail in the second mode.

As described above, in the first to third modes, the in-vehicle apparatus VD displays the digital key information DDK about the holder of the device 30 who is using the vehicle 20 and the digital key information DDK of related holders who are related to the holder of the device 30. The in-vehicle apparatus VD does not display the digital key information DDK of the user D, who is not the holder of the device 30 using the vehicle 20 nor the holder related to the digital key. Thus, in response to a request for display of the digital key information DDK, the in-vehicle apparatus VD shows only the digital key information DDK about some of the holders among all of the digital key information DDK regarding the vehicle 20.

### Outline of State Notification MS

The in-vehicle apparatus VD may display a status notification MS on the display 29. Fig. 13 shows an example of a mode of the status notification MS displayed by the in-vehicle apparatus VD.

When the state of the digital key is changed in the management system 10, the status notification MS notifies the user of the change.

The state of the digital key includes, for example, a registration state of the digital key, such as registered or deleted. In Fig. 13, the in-vehicle apparatus VD displays the status notification MS indicating deletion of the fourth digital key.

The state of the digital key may be, for example, whether the digital key is valid or invalid.

### Process Executed for Displaying State Notification MS

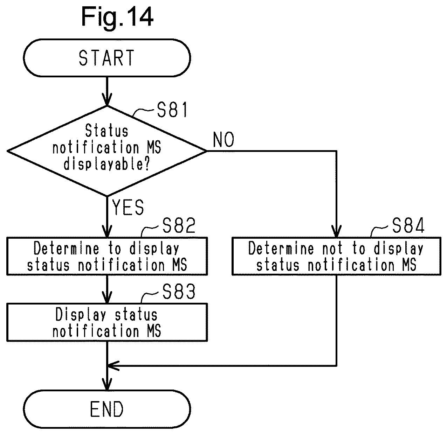

Fig. 14 shows the process executed by the in-vehicle apparatus VD for displaying the status notification MS. Upon detection of a change in the state of any one of the digital keys in the management system 10, the display program PR causes the processor 27 to execute the process shown in Fig. 14.

As shown in Fig. 14, when detecting a change in the state of any one of the digital keys in the management system 10, the processor 27 executes the process of step S81. In the process of step S81, the processor 27 determines whether the status notification MS is displayable on the display 29.

In this process, when the digital key information DDK of a digital key is displayed and the digital key is changed in state, the processor 27 determines that the status notification MS is displayable. The digital key whose digital key information DDK is displayed refers to a digital key whose digital key information DDK is determined to be displayed by the in-vehicle apparatus VD when the in-vehicle apparatus VD is requested to display the digital key information DDK. That is, the digital key whose digital key information DDK is displayed refers to a digital key whose digital key information DDK is displayed in the process of step S73 in Fig. 9.

As shown in Fig. 14, when determining that the status notification MS is not displayable (step S81: NO), the processor 27 proceeds to step S84. In the process of step S84, the processor 27 determines not to display the status notification MS. Then, the processor 27 ends the process shown in Fig. 14. Thus, when the status notification MS is about a digital key whose digital key information DDK is not displayed, the processor 27 does not display the status notification MS on the display 29.

As shown in Fig. 14, when determining that the status notification MS is displayable (step S81: YES), the processor 27 proceeds to step S82. In the process of step S82, the processor 27 determines to display the status notification MS.

Thereafter, the processor 27 executes the process of step S83. In the process of step S83, the processor 27 displays the status notification MS on the display 29. Then, the processor 27 ends the process shown in Fig. 14. As described above, when the status notification MS is about a digital key whose digital key information DDK is displayed, the processor 27 displays the status notification MS on the display 29.

### Operation of the First Embodiment

When displaying the digital key information DDK, the in-vehicle apparatus VD does not display all of the digital key information DDK regarding the vehicle 20 but displays only the digital key information DDK about some of the holders.

### Advantages of the First Embodiment

(1-1) The in-vehicle apparatus VD limits display of information related to the holders of the devices 30.

(1-2) The processor 27, which is processing circuitry, communicates with the devices 30. When authentication of the digital key registered to a device 30 is completed through the communication with the device 30, the processor 27 determines that the holder of the device 30 is using the vehicle 20. When displaying the digital key information DDK, the processor 27 displays the digital key information DDK about the holder who is using the vehicle 20 among all of the digital key information DDK regarding the vehicle 20.

When displaying the digital key information DDK, the in-vehicle apparatus VD does not display all of the digital key information DDK regarding the vehicle 20 but displays the digital key information DDK about the holder who is using the vehicle 20. Thus, the in-vehicle apparatus VD limits display of information related to the holders of the devices 30.

(1-3) The digital key is configured to generate another digital key. When displaying the digital key information DDK of a specified digital key, the processor 27, which is the processing circuitry, displays at least one of the digital key information DDK of a digital key that generates the specified digital key and the digital key information DDK of a digital key that is generated by the specified digital key in addition to the digital key information DDK.

When viewing the digital key information DDK of the specified digital key, the user may also wish to view the digital key information DDK of a digital key related to the specified digital key. When displaying the digital key information DDK of the specified digital key, the in-vehicle apparatus VD also displays the digital key information DDK of a digital key generating the specified digital key and the digital key information DDK of a digital key generated by the specified digital key. Thus, the in-vehicle apparatus VD allows the user to view the digital key information DDK of the digital keys related to the specified digital key when viewing the digital key information DDK of the specified digital key.

(1-4) When displaying the digital key information DDK, the processor 27, which is processing circuitry, displays the number of digital keys that are configured to control the vehicle 20.

When the in-vehicle apparatus VD displays only part of the digital key information DDK, the user cannot recognize the number of digital keys registered for the vehicle 20. The in-vehicle apparatus VD displays the number of digital keys that are registered for the vehicle 20. The in-vehicle apparatus VD allows the user to recognize the number of digital keys registered for the vehicle 20.

(1-5) The in-vehicle apparatus VD is configured to display the status notification MS on the display 29 when the state of the digital key is changed. When displaying the status notification MS, if the status notification MS is about a digital key whose digital key information DDK is displayed, the processor 27, which is processing circuitry, determines to display the status notification MS on the display 29. When displaying the status notification MS, if the status notification MS is about a digital key whose digital key information DDK is not displayed, the processor 27, which is processing circuitry, determines not to display the status notification MS on the display 29.

For example, when a digital key is deleted, the in-vehicle apparatus VD displays a status notification MS indicating deletion of the digital key on the display 29. The holder of a device 30 may wish the digital key information DDK about the holder not to be displayed on the in-vehicle apparatus VD. The holder may also wish the status notification MS not to be displayed on the in-vehicle apparatus VD.

The in-vehicle apparatus VD displays the status notification MS of only the digital key whose digital key information DDK is displayed. Thus, the in-vehicle apparatus VD limits the status notification MS displayed on the display 29.

(1-6) The vehicle 20 includes the in-vehicle apparatus VD. When displaying the digital key information DDK, the vehicle 20 does not display all of the digital key information DDK regarding the vehicle 20 but displays only the digital key information DDK about some of the holders. Thus, the vehicle 20 limits display of information related to the holders of the devices 30.

(1-7) The vehicle 20 includes the in-vehicle apparatus VD. In the in-vehicle apparatus VD, the processor 27, which is processing circuitry, communicates with the devices 30. When authentication of the digital key registered to a device 30 is completed through the communication with the device 30, the processor 27 determines that the holder of the device 30 is using the vehicle 20. When displaying the digital key information DDK, the processor 27 displays the digital key information DDK about the holder who is using the vehicle 20 among all of the digital key information DDK regarding the vehicle 20.

When displaying the digital key information DDK, the vehicle 20 does not display all of the digital key information DDK regarding the vehicle 20 but displays the digital key information DDK about the holder who is using the vehicle 20. Thus, the vehicle 20 limits display of information related to the holders of the devices 30.

(1-8) In the display method described in the first embodiment, the in-vehicle apparatus VD mounted on the vehicle 20 configured to be controlled by a digital key registered to each of the devices 30 displays digital key information DDK on the display 29. The digital key information DDK relates to the digital key and includes information indicating the holder of the device 30 corresponding to the digital key. The display method includes a step (step S73) of displaying the digital key information DDK about some of the holders among all of the digital key information DDK regarding the vehicle 20.

When displaying the digital key information DDK, the display method does not display all of the digital key information DDK regarding the vehicle 20 but displays only the digital key information DDK about some of the holders. Thus, the display method limits display of information related to the holders of the devices 30.

(1-9) When displaying the digital key information DDK, the display program PR does not display all of the digital key information DDK regarding the vehicle 20 but displays only the digital key information DDK about some of the holders. Thus, the display program PR limits display of information related to the holders of the devices 30.

### Second Embodiment

A second embodiment of a management system including an in-vehicle apparatus will be described below with reference to the drawings. In the second embodiment, the in-vehicle apparatus VD does not display the digital key information DDK about the holder who is using the vehicle 20, which differs from the first embodiment. Instead, in the second embodiment, when the user searches for the digital key information DDK about a specific digital key, the in-vehicle apparatus VD displays only the digital key information DDK about the specific digital key. The description will focus on the differences from the first embodiment. The same points will be briefly described or will not be described.

### Process Executed by the In-Vehicle Apparatus VD

In the management system 10 of the second embodiment, ID is set for each digital key as identification information.

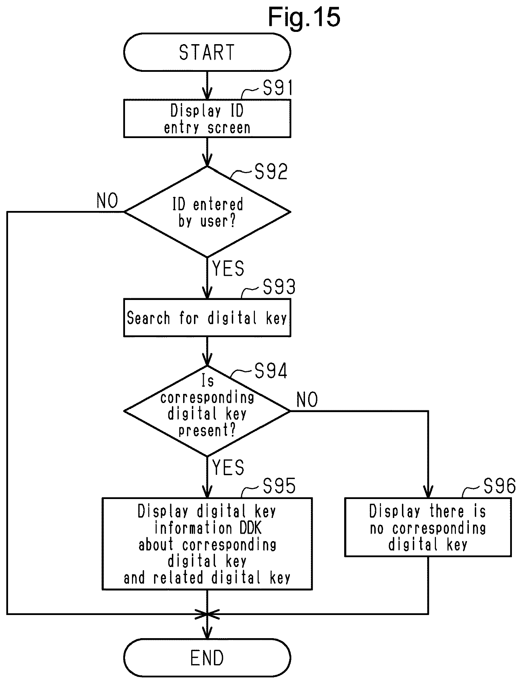

Fig. 15 shows a process executed by the in-vehicle apparatus VD for displaying the digital key information DDK. The process shown in Fig. 15 is executed by the processor 27 based on the display program PR in response to a request for display of the digital key information DDK.

As shown in Fig. 15, in response to a request for display of the digital key information DDK, the processor 27 executes the process of step S91. In the process of step S91, the processor 27 displays an ID entry screen on the display 29. The ID entry screen is a screen requesting entry of the ID of a digital key from the user. On the ID entry screen, the user enters, in the in-vehicle apparatus VD, the ID of a digital key whose digital key information DDK the user wishes to view.

Subsequent to the display of the ID entry screen, the processor 27 proceeds to step S92. In step S92, the processor 27 determines whether the user enters an ID. When the user enters an ID in a predetermined period, the processor 27 determines that the user has entered an ID. When the user does not enter an ID in the predetermined period, the processor 27 determines that the user does not enter an ID. When determining that the user does not enter an ID (step S92: NO), the processor 27 ends the process shown in Fig. 15. When determining that the user has entered an ID (step S92: YES), the processor 27 proceeds to step S93.

In the process of step S93, the processor 27 searches for the entered ID. In this step, the processor 27 searches for the digital key indicated by the entered ID among the digital keys indicated by the authentication information AT stored in the storage 28. Further, for example, the processor 27 may communicate with the management server 70 and instruct the management server 70 to search for the digital key indicated by the entered ID among the digital keys stored in the database DB. Subsequently, the processor 27 proceeds to step S94.

In the process of step S94, the processor 27 determines whether a digital key that corresponds to the entered ID is present. When the digital key indicated by the entered ID is found as a result of the search for the digital key, the processor 27 determines that the digital key corresponding to the entered ID is present. When the digital key indicated by the entered ID is not found, the processor 27 determines that the digital key corresponding to the entered ID is not present.

In the process of step S94, when determining that the digital key corresponding to the entered ID is present (step S94: YES), the processor 27 proceeds to step S95. In the process of step S95, the processor 27 displays the digital key information DDK about a digital key corresponding to the entered ID and the digital key information DDK about a digital key related to the digital key. Subsequently, the processor 27 ends the process shown in Fig. 15.

In the process of step S94, when determining that the digital key corresponding to the entered ID is not present (step S94: NO), the processor 27 proceeds to step S96. In the process of step S96, the processor 27 displays that no digital key corresponds to the entered ID on the display 29. Subsequently, the processor 27 ends the process shown in Fig. 15.

### Specific Display Mode

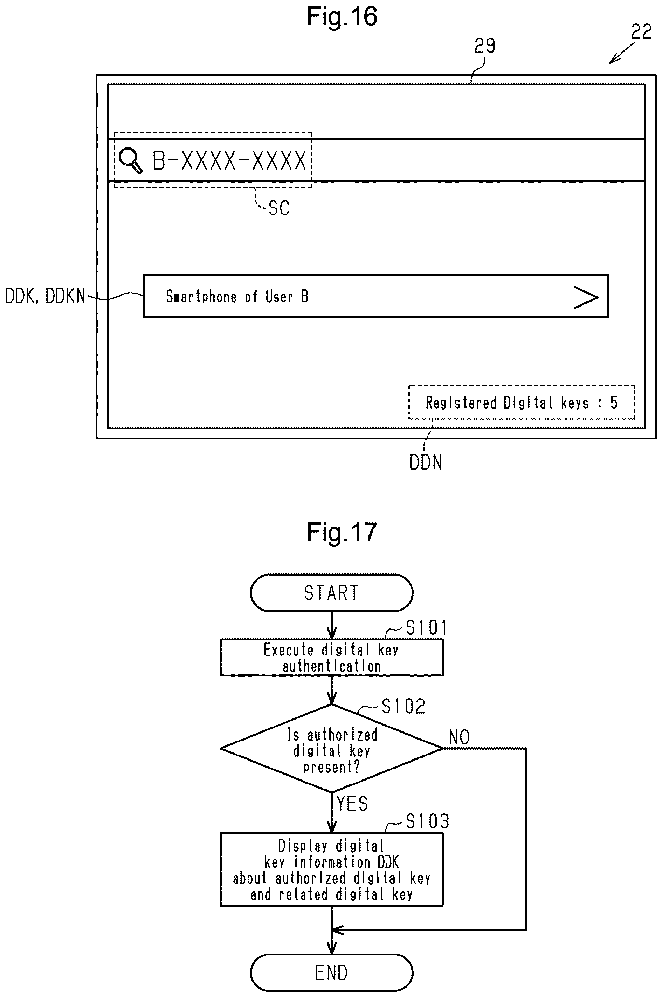

Fig. 16 shows a specific mode of digital key information DDK displayed by the in-vehicle apparatus VD of the second embodiment. With reference to Fig. 16, the specific mode of the digital key information DDK displayed by the in-vehicle apparatus VD of the second embodiment will be described below.

When the in-vehicle apparatus VD is requested to display the digital key information DDK, the in-vehicle apparatus VD executes the process shown in Fig. 15. Fig. 16 shows a display mode initially shown on the display 29 as a result of the process. Hereinafter, the display mode shown in Fig. 16 is referred to as the fourth mode.

In Fig. 16, the ID of the second digital key, according to the hypothetical case described above, is entered into the in-vehicle apparatus VD.

As shown in Fig. 16, in the fourth mode, the in-vehicle apparatus VD displays search information SC. The search information SC indicates the ID that is entered by the user into the in-vehicle apparatus VD.

As shown in Fig. 16, in the fourth mode, the in-vehicle apparatus VD displays the device name information DDKN of the second digital key as the digital key information DDK.

As shown in Fig. 16, in the fourth mode, the in-vehicle apparatus VD displays the quantity information DDN.

In the fourth mode, the rectangle surrounding the device name information DDKN entirely serves as a button. In Fig. 16, when the user presses the rectangle surrounding the device name information DDKN of the second digital key, the in-vehicle apparatus VD displays details of the digital key information DDK of the second digital key. When the user presses the rectangle surrounding the device name information DDKN of the second digital key, the content displayed on the display 29 is changed to the second mode shown in Fig. 11. In the in-vehicle apparatus VD of the second embodiment, in the second mode, when the rectangle surrounding the device name information DDKN about a related digital key is pressed, the content displayed on the display 29 is changed to the third mode shown in Fig. 12.

### Operation and Advantages of the Second Embodiment

(2-1) The in-vehicle apparatus VD of the second embodiment has the advantages (1-1) and (1-3) to (1-5) of the first embodiment.

(2-2) The vehicle 20 of the second embodiment has the advantage (1-6) of the first embodiment.

(2-3) The display method of the second embodiment has the advantage (1-8) of the first embodiment.

(2-4) The display program PR of the second embodiment has the advantage (1-9).

(2-5) In the in-vehicle apparatus VD of the second embodiment, in response to entry of identification information of a digital key that is configured to control the vehicle 20, the processor 27, which is processing circuitry, displays the digital key information DDK about the digital key indicated by the identification information on the display 29.

In response to entry of identification information of a digital key, the in-vehicle apparatus VD displays the digital key information DDK about the digital key indicated by the identification information. The in-vehicle apparatus VD displays the digital key information DDK about the digital key, the identification information of which is entered, among all of the digital key information DDK regarding the vehicle 20. Thus, the in-vehicle apparatus VD limits display of information related to the holders of the devices 30.

(2-6) The vehicle 20 of the second embodiment includes the in-vehicle apparatus VD. In the in-vehicle apparatus VD, in response to entry of identification information of a digital key that is configured to control the vehicle 20, the processor 27, which is processing circuitry, displays the digital key information DDK about the digital key indicated by the identification information on the display 29.

In response to entry of identification information of a digital key, the vehicle 20 displays the digital key information DDK about the digital key indicated by the identification information. The vehicle 20 displays the digital key information DDK about the digital key, the identification information of which is entered, among all of the digital key information DDK regarding the vehicle 20. Thus, the vehicle 20 limits display of information related to the holders of the devices 30.

### Third Embodiment

A third embodiment of a management system including an in-vehicle apparatus will be described below with reference to the drawings. In the third embodiment, in response to a request for display of the digital key information DDK, the in-vehicle apparatus VD newly executes digital key authentication and then shows the digital key information DDK about the authorized digital key, which differs from the first embodiment. The description will focus on the differences from the first embodiment. The same points will be briefly described or will not be described.

### Process Executed by the In-Vehicle Apparatus VD

Fig. 17 shows a process executed by the in-vehicle apparatus VD for displaying the digital key information DDK. The process shown in Fig. 17 is executed by the processor 27 based on the display program PR when an operation for requesting display of the digital key information DDK is performed on the in-vehicle apparatus VD.

As shown in Fig. 17, when the operation for requesting display of the digital key information DDK is performed on the in-vehicle apparatus VD, the processor 27 executes the process of step S101. In the process of step S101, the processor 27 executes digital key authentication.

The processor 27 executes digital key authentication in a manner shown in Fig. 8.

The processor 27 performs the BLE communication or the NFC communication with a device 30 present in an area where the vehicle 20 can perform the BLE communication or the NFC communication. The processor 27 receives the key information DK from the device 30. The device 30 transmits the key information DK stored in the storage 37.

Subsequently, the processor 27 executes the digital key authentication in the same manner as the process of step S61 shown in Fig. 8. More specifically, the processor 27 compares the received key information DK with the authentication information AT stored in the storage 28 to determine whether the digital key indicated by the key information DK is authorized to control the vehicle 20. When the processor 27 determines that the digital key indicated by the received key information DK is authorized to control the vehicle 20, the digital key authentication is completed.

As shown in Fig. 17, subsequent to the digital key authentication, the processor 27 executes the process of step S102. In the process of step S102, the processor 27 determines whether an authorized digital key is present.

In the process of step S102, when determining that no authorized digital key is present (step S102: NO), the processor 27 ends the process shown in Fig. 17. More specifically, when there is no digital key authorized through the process of step S101, the processor 27 does not display the digital key information DDK.

In the process of step S102, when determining that an authorized digital key is present (step S102: YES), the processor 27 proceeds to step S103. In the process of step S103, the processor 27 displays the digital key information DDK about the authorized digital key and the digital key information DDK about a related digital key on the display 29. Subsequently, the processor 27 ends the process shown in Fig. 17.

When an operation for requesting display of the digital key information DDK is performed, the in-vehicle apparatus VD executes the process shown in Fig. 17 and then displays the digital key information DDK about the authorized digital key and the digital key information DDK about a digital key related to the authorized digital key. The in-vehicle apparatus VD displays the digital key information DDK about the authorized digital key and the digital key information DDK about a digital key related to the authorized digital key based on the first to third modes shown in Figs. 10 to 12.

The first mode shows a list of the device name information DDKN about an authorized digital key. The second mode shows details of the digital key information DDK about the authorized digital key and a list of the device name information DDKN about related digital keys. The third mode shows details of the digital key information DDK about a related digital key.

### Operation and Advantages of the Third Embodiment

(3-1) The in-vehicle apparatus VD of the third embodiment has the advantages (1-1) and (1-3) to (1-5) of the first embodiment.

(3-2) The vehicle 20 of the third embodiment has the advantage (1-6) of the first embodiment.

(3-3) The display method of the third embodiment has the advantage (1-8) of the first embodiment.

(3-4) The display program PR of the third embodiment has the advantage (1-9).

(3-5) In the in-vehicle apparatus VD of the third embodiment, in response to a request for display of the digital key information DDK, the processor 27, which is processing circuitry, communicates with the device 30. When displaying the digital key information DDK, the processor 27 displays the digital key information DDK about a digital key on which authentication is completed through communication with the device 30 among all of the digital key information DDK regarding the vehicle 20.

In response to a request for display of the digital key information DDK, the in-vehicle apparatus VD communicates with a device 30 that can communicate with the in-vehicle apparatus VD. Then, the in-vehicle apparatus VD displays the digital key information DDK of a digital key on which authentication is completed through the communication. Thus, the in-vehicle apparatus VD limits display of information related to the holders of the devices 30.

(3-6) The vehicle 20 of the third embodiment includes the in-vehicle apparatus VD. In the in-vehicle apparatus VD, in response to a request for display of the digital key information DDK, the processor 27, which is processing circuitry, communicates with the device 30. When displaying the digital key information DDK, the processor 27 displays the digital key information DDK about a digital key on which authentication is completed through communication with the device 30 among all of the digital key information DDK regarding the vehicle 20.

In response to a request for display of the digital key information DDK, the vehicle 20 communicates with a device 30 that can communicate with the in-vehicle apparatus VD. Then, the vehicle 20 displays the digital key information DDK of a digital key on which authentication is completed through the communication. Thus, the vehicle 20 limits display of information related to the holders of the devices 30.

### Other Embodiments

The embodiments described above may be modified as described below. The embodiments and the following modified examples can be combined as long as the combined modified examples remain technically consistent with each other.

### Management System 10

The vehicle 20 does not have to include one or more of the BLE module 23, the UWB module 24, and the NFC module 25. The vehicle 20 is configured to perform short-range wireless communication with the device 30 as long as it includes at least one module. The vehicle 20 may include modules other than those listed above, provided that it includes a module configured to perform short-range wireless communication with the device 30.

The digital key-related aspects of the embodiments described above do not have to be compliant with the CCC standard.

The vehicle manager 26 does not have to be a digital key ECU. The vehicle manager 26 may be, for example, a central ECU that manages multiple ECUs of the vehicle 20 in a centralized manner.

The vehicle manager 26 may include circuitry including one or more processors that perform various processes according to computer programs (software). The vehicle manager 26 may be circuitry including one or more dedicated hardware circuits such as application specific integrated circuits (ASIC) that execute at least part of various processes, or a combination thereof. The processor includes a CPU and memory such as RAM and ROM. The memory stores program codes or instructions configured to cause the CPU to execute processes. The memory, which is a computer-readable storage medium, may include any type of media that is accessible by a general-purpose computer or a dedicated computer. The same applies to the devices 30 and the management server 70.

The friend device 51 is not limited to a smartphone and a smartwatch. The friend device 51 may be, for example, a predetermined server.

As described above in the embodiments, the shareable device 50 is configured to receive a shareable key KS. A device 30 configured to receive a digital key, such as the shareable device 50, may be referred to as a receiver device.

In the embodiments described above, the owner key KO, the friend key KF, and the guest key KN are ranked in the hierarchy of priority in this order, and a higher degree of authority is granted to a digital key having a higher priority level. However, a higher degree of authority does not have to be granted to a digital key having a higher priority devel. For example, the owner key KO, the friend key KF, and the guest key KN, being in three different ranks, may be set to the same degree of authority.

A separate device server 60 does not have to be provided for each type of device 30. It is sufficient that the multiple devices 30 and the management server 70 wirelessly communicate with each other. The device server 60 may be omitted. It is sufficient that the multiple devices 30 and the management server 70 communicate directly via wireless communication.

The management server 70 may include multiple servers. In an example, the management server 70 may include a server that stores the database DB and a server that executes the server program PS. In another example, the management server 70 may include a server that communicates with the vehicle 20 and a server that communicates with the device server 60. The two servers may be configured to communicate with each other.

The management server 70 does not have to store the database DB. It is sufficient that the management server 70 manages at least a combination of the key information DK of a device 30 and the authentication information AT of the vehicle manager 26 for one digital key in the management system 10.

### Various Types of Information

As long as the authentication information AT authenticates a digital key to use the digital key, the authentication information AT is not limited to the examples described above in the embodiments. In an example, the authentication information AT may be a common key shared by the vehicle manager 26 and the device 30. In another example, the authentication information AT may be a common private key.

The configuration of information included in the key information DK is not limited to the examples described above in the embodiments. In an example, the owner key information DKO does not have to include the slot identification information ST4. In another example, the key information DK may include information indicating the type of digital key. The information indicating the type of digital key includes, for example, information indicating one of the owner key KO, the friend key KF, and the guest key KN.

The database DB may include information indicating the type of device 30. The information indicating the type of device 30 includes, for example, information indicating any of a smartphone, a smartwatch, and a predetermined server described in the modified examples.

The configuration of the data DA in the database DB is not limited to the examples described above in the embodiments. It is sufficient that the database DB stores information necessary for the management server 70 to perform management in the management system 10.

In the database DB, the authority does not necessarily have to be uniformly determined in accordance with the type of digital key, and may be set for each digital key. In the database DB, the authority does not have to be granted to any digital key.

### Process for Registering Digital Keys

The process for registering the owner key KO is not limited to the examples described above in the embodiments. For example, even if pairing through the process of step S12 is not performed, the owner device 40 may store the owner key information DKO by exchanging information such as the generation data DC between the vehicle 20 and the first device 30A via the management server 70. The process for registering the owner key KO may be appropriately modified to align with the configuration of the information included in the owner key information DKO and the configuration of the information included in the authentication information AT.

The process for registering a friend key KF is not limited to the examples described above in the embodiments. For example, the management server 70 may update the database DB through the process of step S29 after transmitting the authentication package ATP and the storage request D24 to the vehicle 20. The process for registering the friend key KF may be appropriately modified to align with the configuration of the information included in the friend key information DKF and the configuration of the information included in the authentication information AT.

The process for registering a guest key KN is not limited to the examples described above in the embodiments. The sequence of the process for registering a guest key KN may differ from the sequence of the process for registering a friend key KF. The process for registering the guest key KN may be appropriately modified to align with the configuration of the information included in the guest key information DKN and the configuration of the information included in the authentication information AT.

The guest key KN does not necessarily have to be included in the type of digital key. That is, the friend key KF may be the only shareable key KS in the management system 10.

The guest device 52 may be configured to transmit a request for registration of a new guest key KN. In other words, the shareable device 50 may transmit a request for registration of a new guest key KN, regardless of whether the shareable device 50 is the friend device 51 or the guest device 52. In this case, the management system 10 may register a new guest key KN through the process shown in Fig. 7.

### Display Mode by the In-Vehicle Apparatus VD

In the first to third embodiments, the digital key information DDK about a related digital key is displayed. However, the in-vehicle apparatus VD does not necessarily have to display the digital key information DDK about a related digital key.

In the first to third embodiments, when displaying the digital key information DDK, the in-vehicle apparatus VD displays the quantity information DDN. However, the in-vehicle apparatus VD does not necessarily have to display the quantity information DDN.

In the first to third embodiments, the in-vehicle apparatus VD displays the status notification MS of only a digital key whose digital key information DDK is determined to be displayable. Instead, when displaying the status notification MS, the in-vehicle apparatus VD may display the status notification MS regardless of whether the digital key information DDK is displayable.

In the first to third embodiments, the in-vehicle apparatus VD displays the status notification MS. However, the in-vehicle apparatus VD does not necessarily have to display the status notification MS.

In the second embodiment, the mode of the digital key information DDK displayed by the in-vehicle apparatus VD may be combined with that of the first embodiment. In this case, while displaying the digital key information DDK about the holder who is using the vehicle 20, when an ID is entered, the in-vehicle apparatus VD displays the digital key information DDK about the digital key indicated by the ID.

In the second embodiment, the mode of the digital key information DDK displayed by the in-vehicle apparatus VD may be combined with that of the third embodiment. In this case, while displaying the digital key information DDK about the authorized digital key, when an ID is entered, the in-vehicle apparatus VD displays the digital key information DDK about a digital key indicated by the ID.

In the second embodiment, the user enters the ID of a digital key into the in-vehicle apparatus VD as identification information of the digital key. Identification information that is entered by the user into the in-vehicle apparatus VD does not necessarily have to be an ID. For example, the user may enter the device name or the name of the holder of the device 30 as identification information about the digital key into the in-vehicle apparatus VD.

Under a predetermined condition, the in-vehicle apparatus VD may display all of the digital key information DDK regarding the vehicle 20 without limiting display of the digital key information DDK.

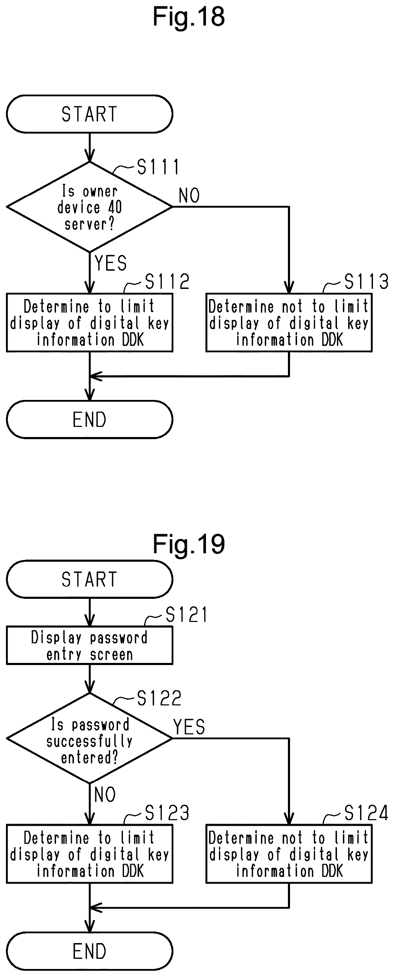

Fig. 18 is a flowchart showing a process executed by a first modified example of the in-vehicle apparatus VD. The display program PR causes the processor 27 to execute the process shown in Fig. 18.

The mode of the first modified example may be applied to the first to third embodiments. When the mode of the first modified example is applied to the first embodiment, in response to an operation for requesting display of the digital key information DDK, the processor 27 executes the process shown in Fig. 18 before executing the process shown in Fig. 9. When the mode of the first modified example is applied to the second embodiment, in response to an operation for requesting display of the digital key information DDK, the processor 27 executes the process shown in Fig. 18 before executing the process shown in Fig. 15. When the mode of the first modified example is applied to the third embodiment, in response to an operation for requesting display of the digital key information DDK, the processor 27 executes the process shown in Fig. 18 before executing the process shown in Fig. 17.

When the process shown in Fig. 18 starts, the processor 27 executes the process of step S111. In the process of step S111, the processor 27 determines whether the owner device 40 is the server in the management system 10.

The owner device 40 may be a portable information terminal or a server. The processor 27 determines whether the owner device 40 is the server, for example, based on the authentication information AT stored in the storage 28. The processor 27 may, for example, communicate with the owner device 40 and inquire whether the owner device 40 is the server. The processor 27 may, for example, communicate with the management server 70 and inquire whether the owner device 40 is the server.

In the process of step S111, when determining that the owner device 40 is the server (step S111: YES), the processor 27 proceeds to step S112. In the process of step S112, the processor 27 determines to limit display of the digital key information DDK. Subsequently, the processor 27 ends the process shown in Fig. 18.

When the mode of the first modified example is applied to the first embodiment, the processor 27 executes the process of step S112 and then executes the process shown in Fig. 9. When the mode of the first modified example is applied to the second embodiment, the processor 27 executes the process of step S112 and then executes the process shown in Fig. 15. When the mode of the first modified example is applied to the third embodiment, the processor 27 executes the process of step S112 and then executes the process shown in Fig. 17.

In the process of step S111, when determining that the owner device 40 is not the server (step S111: NO), the processor 27 proceeds to step S113. In the process of step S113, the processor 27 determines not to limit display of the digital key information DDK. Subsequently, the processor 27 ends the process shown in Fig. 18.

When the mode of the first modified example is applied to the first embodiment, the processor 27 executes the process of step S113 and then displays all of the digital key information DDK regarding the vehicle 20 without executing the process shown in Fig. 9. When the mode of the first modified example is applied to the second embodiment, the processor 27 executes the process of step S113 and then displays all of the digital key information DDK regarding the vehicle 20 without executing the process shown in Fig. 15. When the mode of the first modified example is applied to the third embodiment, the processor 27 executes the process of step S113 and then displays all of the digital key information DDK regarding the vehicle 20 without executing the process shown in Fig. 17.

In this case, when the owner device 40, which is the device 30 belonging to the owner of the vehicle 20, is a portable information terminal of the owner, the processor 27, which is processing circuitry, displays all of the digital key information DDK regarding the vehicle 20. When the owner device 40 is a server that belongs to the owner and is configured to generate a digital key of a device in response to a request from the device, the processor 27 displays the digital key information DDK about some of the holders among all of the digital key information DDK regarding the vehicle 20.

The owner device 40 may be a server contracted by the owner. Such an owner device 40 is mainly used to generate a shareable key KS instead of performing an operation for, for example, unlocking the vehicle 20. Therefore, when the owner device 40 is a server, a relatively large number of shareable keys KS may be generated. Particularly, in such a circumstance, the holder of the device 30 storing information related to the shareable keys KS may not wish the digital key information DDK of the holder to be displayed in the in-vehicle apparatus VD.

The in-vehicle apparatus VD determines whether or not to limit display of the digital key information DDK depending on the type of the owner device 40. Thus, when the holder of the device 30 particularly does not wish the digital key information DDK about the holder to be displayed in the in-vehicle apparatus VD, the in-vehicle apparatus VD limits display of the digital key information DDK.

Fig. 19 is a flowchart showing a process executed by a second modified example of the in-vehicle apparatus VD. The display program PR causes the processor 27 to execute the process shown in Fig. 19.

The mode of the second modified example may be applied to the first to third embodiments. When the mode of the second modified example is applied to the first embodiment, in response to an operation for requesting display of the digital key information DDK, the processor 27 executes the process shown in Fig. 18 before executing the process shown in Fig. 9. When the mode of the second modified example is applied to the second embodiment, in response to an operation for requesting display of the digital key information DDK, the processor 27 executes the process shown in Fig. 18 before executing the process shown in Fig. 15. When the mode of the second modified example is applied to the third embodiment, in response to an operation for requesting display of the digital key information DDK, the processor 27 executes the process shown in Fig. 18 before executing the process shown in Fig. 17.

When the process shown in Fig. 19 starts, the processor 27 executes the process of step S121. In the process of step S121, the processor 27 displays a password entry screen on the display 29. In the second modified example, a password is set in advance. The password entry screen is a screen requesting entry of a password from the user.

The processor 27 displays the password entry screen and then proceeds to step S122. In the process of step S122, the processor 27 determines whether the password is successfully entered by the user.

When information such as a character string entered by the user matches the password, the processor 27 determines that the password is successfully entered by the user. When information such as a character string entered by the user does not match the password, the processor 27 determines that the password is not successfully entered by the user. In an example, the password entry screen may be provided with a button that may be pressed when the user does not know the password. When the button is pressed, the processor 27 may determine that the password is not successfully entered by the user. In an example, when the password is not entered within a predetermined length of time, the processor 27 may determine that the password is not successfully entered by the user.

In the process of step S122, when determining that the password is not successfully entered by the user (step S122: NO), the processor 27 proceeds to step S123. In the process of step S123, the processor 27 determines to limit display of the digital key information DDK. Subsequently, the processor 27 ends the process shown in Fig. 19.

When the mode of the second modified example is applied to the first embodiment, the processor 27 executes the process of step S123 and then executes the process shown in Fig. 9. When the mode of the second modified example is applied to the second embodiment, the processor 27 executes the process of step S123 and then executes the process shown in Fig. 15. When the mode of the second modified example is applied to the third embodiment, the processor 27 executes the process of step S123 and then executes the process shown in Fig. 17.

In the process of step S122, when determining that the password is successfully entered by the user (step S122: YES), the processor 27 proceeds to step S124. In the process of step S124, the processor 27 determines not to limit display of the digital key information DDK. Subsequently, the processor 27 ends the process shown in Fig. 19.

When the mode of the second modified example is applied to the first embodiment, the processor 27 executes the process of step S124 and then displays all of the digital key information DDK regarding the vehicle 20 without executing the process shown in Fig. 9. When the mode of the second modified example is applied to the second embodiment, the processor 27 executes the process of step S124 and then displays all of the digital key information DDK regarding the vehicle 20 without executing the process shown in Fig. 15. When the mode of the second modified example is applied to the third embodiment, the processor 27 executes the process of step S124 and then displays all of the digital key information DDK regarding the vehicle 20 without executing the process shown in Fig. 17.

In this case, the processor 27, which is processing circuitry, displays all of the digital key information DDK regarding the vehicle 20 when the specified password is entered.

The user may wish to view all of the digital key information DDK regarding the vehicle 20. The in-vehicle apparatus VD displays all of the digital key information DDK regarding the vehicle 20 when the password is entered. Thus, while limiting display of information about the holders of the devices 30, the in-vehicle apparatus VD displays all of the digital key information DDK regarding the vehicle 20 when necessary.

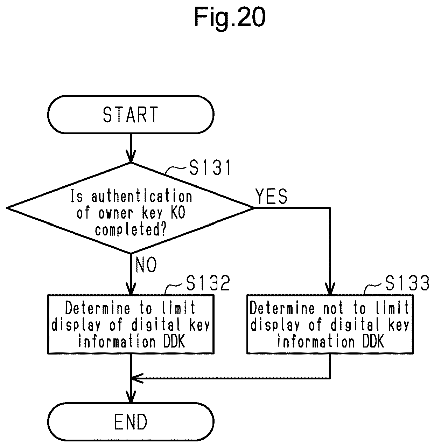

Fig. 20 is a flowchart showing a process executed by a third modified example of the in-vehicle apparatus VD. The display program PR causes the processor 27 to execute the process shown in Fig. 20.

The mode of the third modified example may be applied to the first to third embodiments. When the mode of the first modified example is applied to the first embodiment, in response to an operation for requesting display of the digital key information DDK, the processor 27 executes the process shown in Fig. 20 before executing the process shown in Fig. 9. When the mode of the third modified example is applied to the second embodiment, in response to an operation for requesting display of the digital key information DDK, the processor 27 executes the process shown in Fig. 20 before executing the process shown in Fig. 15. When the mode of the third modified example is applied to the third embodiment, in response to an operation for requesting display of the digital key information DDK, the processor 27 executes the process shown in Fig. 20 before executing the process shown in Fig. 17.

When the process shown in Fig. 20 starts, the processor 27 executes the process of step S131. In the process of step S131, the processor 27 determines whether authentication of the owner key KO is completed.

As described with reference to Fig. 8, the in-vehicle apparatus VD receives key information DK through the BLE communication or the NFC communication with the device 30 and then stores an authorized digital key based on the key information DK as valid. In the process of step S131, when the processor 27 verifies with the storage 28 that the valid devices 30 include the owner device 40, the processor 27 determines that authentication of the owner key KO is completed. In the process of step S131, when the processor 27 verifies with the storage 28 that the valid devices 30 do not include the owner device 40, the processor 27 determines that authentication of the owner key KO is not completed.

For example, in response to a request for display of the digital key information DDK, the processor 27 may attempt to perform the BLE communication or the NFC communication with the owner device 40. In this case, when owner key information DKO is received from the owner device 40 and authentication of the owner key KO is completed based on the owner key information DKO, the processor 27 determines that authentication of the owner key KO is completed. When the processor 27 cannot perform the BLE communication or the NFC communication with the owner device 40 or when authentication of the owner key KO based on the owner key information DKO is not completed, the processor 27 determines that authentication of the owner key KO is not completed.

In the process of step S131, when determining that authentication of the owner key KO is not completed (step S131: NO), the processor 27 proceeds to step S132. In the process of step S132, the processor 27 determines to limit display of the digital key information DDK. Subsequently, the processor 27 ends the process shown in Fig. 20.

When the mode of the third modified example is applied to the first embodiment, the processor 27 executes the process of step S132 and then executes the process shown in Fig. 9. When the mode of the third modified example is applied to the second embodiment, the processor 27 executes the process of step S132 and then executes the process shown in Fig. 15. When the mode of the third modified example is applied to the third embodiment, the processor 27 executes the process of step S132 and then executes the process shown in Fig. 17.

In the process of step S131, when determining that authentication of the owner key KO is completed (step S131: YES), the processor 27 proceeds to step S133. In the process of step S133, the processor 27 determines not to limit display of the digital key information DDK. Subsequently, the processor 27 ends the process shown in Fig. 20.

When the mode of the second modified example is applied to the first embodiment, the processor 27 executes the process of step S133 and then displays all of the digital key information DDK regarding the vehicle 20 without executing the process shown in Fig. 9. When the mode of the third modified example is applied to the second embodiment, the processor 27 executes the process of step S133 and then displays all of the digital key information DDK regarding the vehicle 20 without executing the process shown in Fig. 15. When the mode of the third modified example is applied to the third embodiment, the processor 27 executes the process of step S133 and then displays all of the digital key information DDK regarding the vehicle 20 without executing the process shown in Fig. 17.

In this case, the processor 27, which is processing circuitry, communicates with the device 30. When authentication of the owner device 40, which is the device 30 belonging to the owner of vehicle 20, is completed through communication with the device 30, the processor 27 displays all of the digital key information DDK regarding the vehicle 20.

The owner of the vehicle 20 may wish to view all of the digital key information DDK regarding the vehicle 20 of the owner. When authentication of the owner device 40 is completed, the in-vehicle apparatus VD displays all of the digital key information DDK regarding the vehicle 20. Thus, while limiting display of information about the holders of the devices 30, the in-vehicle apparatus VD displays all of the digital key information DDK regarding the vehicle 20 to the owner.

In the first modified example, when determining that the owner device 40 is the server (step S111: YES), the in-vehicle apparatus VD limits display of the digital key information DDK. In this case, the in-vehicle apparatus VD executes the process of step S112 and then the process shown in Fig. 9, 15. or 17, thereby limiting display of the digital key information DDK. The mode of limiting display of the digital key information DDK with the in-vehicle apparatus VD is not limited to the modes of the first modified example. For example, when the owner device 40 is the server, the in-vehicle apparatus VD may display the digital key information DDK about all of the digital keys except the owner key KO. That is, the in-vehicle apparatus VD does not display the digital key information DDK about the owner key KO.

The reference that the in-vehicle apparatus VD determines not to limit display of the digital key information DDK based on is not limited to those described in the first to third modified examples. In an example, in response to a request for display of the digital key information DDK, if biometric authentication is performed and the biometric authentication is completed, the in-vehicle apparatus VD may determine not to limit display of the digital key information DDK.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A in-vehicle apparatus (VD) configured to be mounted on a vehicle (20), the vehicle (20) being configured to be controlled by each of digital keys, the digital keys being respectively registered to devices (30), the devices (30) being respectively held by holders, the in-vehicle apparatus (VD), comprising:
processing circuitry (27); and
a display (29), wherein
digital key information relates to each of the digital keys and includes information indicating the holder of the device (30) corresponding to each of the digital keys, and
when displaying the digital key information on the display (29), the processing circuitry (27) is configured to display (29) only the digital key information about some of the holders among all of the digital key information regarding the vehicle (20).

2. The in-vehicle apparatus (VD) according to claim 1, wherein the processing circuitry (27) is configured to:
communicate with a device among the devices (30);
determine that the holder of the device (30) is using the vehicle (20) when authentication of the digital key registered to the device (30) is completed through communication with the device (30); and
when displaying the digital key information, display (29) the digital key information about the holder who is using the vehicle (20) among all of the digital key information regarding the vehicle (20).

3. The in-vehicle apparatus (VD) according to claim 1 or 2, wherein in response to entry of identification information of a digital key of the digital keys configured to control the vehicle (20), the processing circuitry (27) is configured to display (29) the digital key information about the digital key indicated by the identification information on the display (29).

4. The in-vehicle apparatus (VD) according to any one of claims 1 to 3, wherein the processing circuitry (27) is configured to:
in response to a request for display of the digital key information, communicate with a device of the devices (30) corresponding to the digital key information; and
when displaying the digital key information, among all of the digital key information regarding the vehicle (20), display (29) the digital key information about a digital key, of the digital keys, on which authentication is completed through communication with the device (30).

5. The in-vehicle apparatus (VD) according to any one of claims 2 to 4, wherein
at least one of the digital keys is configured to generate another one of the digital keys, and
when displaying the digital key information about a specified digital key, the processing circuitry (27) is configured to display (29) at least one of the digital key information about a digital key that has generated the specified digital key and the digital key information about a digital key that is generated by the specified digital key in addition to displaying the digital key information about the specified digital key.

6. The in-vehicle apparatus (VD) according to any one of claims 1 to 5, wherein
among the devices (30), a device belonging to an owner of the vehicle (20) is referred to as an owner device (40), and
the processing circuitry (27) is configured to:
when the owner device (40) is a portable information terminal held by the owner, display all of the digital key information regarding the vehicle (20), and
when the owner device (40) is a sever belonging to the owner and is configured to generate the digital key for a device (30) in response to a request from the device (30), display only the digital key information about some of the holders among all of the digital key information regarding the vehicle (20).

7. The in-vehicle apparatus (VD) according to any one of claims 1 to 6, wherein when a specified password is entered, the processing circuitry (27) is configured to display all of the digital key information regarding the vehicle (20).

8. The in-vehicle apparatus (VD) according to any one of claims 1 to 7, wherein the processing circuitry (27) is configured to:
communicate with a device among the devices (30); and
when authentication of an owner device (40) is completed through communication with the device (30), display all of the digital key information regarding the vehicle (20), wherein the owner device (40) is a device of the devices (30) belonging to an owner of the vehicle (20).

9. The in-vehicle apparatus (VD) according to any one of claims 1 to 8, wherein when displaying the digital key information, the processing circuitry (27) is configured to display a number of the digital keys configured to control the vehicle (20).

10. The in-vehicle apparatus (VD) according to any one of claims 1 to 9, wherein
when a state of each of the digital keys is changed, the in-vehicle apparatus (VD) is configured to display a notification on the display (29), and
the processing circuitry (27) is configured to:
when the notification is about the digital key whose digital key information is displayed, determine to display the notification on the display (29); and
when the notification is about the digital key whose digital key information is not displayed, determine not to display the notification on the display (29).

11. A vehicle (20) comprising:
the in-vehicle apparatus (VD) according to any one of claims 1 to 10.

12. A display method for displaying digital key information on a display (29) of an in-vehicle apparatus (VD), wherein the in-vehicle apparatus (VD) is configured to be mounted on a vehicle (20), the vehicle (20) is configured to be controlled by each of digital keys, the digital keys are respectively registered to devices (30), the devices (30) are respectively held by holders, and the digital key information relates to each of the digital keys and includes information indicating the holder of the device (30) corresponding to each of the digital keys, the display method comprising:
displaying only the digital key information about some of the holders among all of the digital key information regarding the vehicle (20).

13. A display program (PR), comprising:
an instruction executed by processing circuitry (27) of an in-vehicle apparatus (VD), wherein
the in-vehicle apparatus (VD) is configured to be mounted on a vehicle (20) configured to be controlled by each of digital keys, the digital keys are respectively registered to devices (30), and the devices (30) are respectively held by holders, and
the instruction includes causing the processing circuitry (27), when the in-vehicle apparatus (VD) displays digital key information that relates to each of the digital keys and includes information indicating the holder of the device (30) corresponding to each of the digital keys on a display (29), to display only the digital key information about some of the holders among all of the digital key information regarding the vehicle (20).
